(19) **Europäisches Patentamt / European Patent Office / Office européen des brevets**

(11) **EP 4 570 767 A1**

(12) **EUROPEAN PATENT APPLICATION**
published in accordance with Art. 153(4) EPC

(43) Date of publication:
**18.06.2025 Bulletin 2025/25**

(21) Application number: **23852507.5**

(22) Date of filing: **04.08.2023**

(51) International Patent Classification (IPC):
$C03C\ 3/087$ (2006.01)   $C03C\ 3/091$ (2006.01)
$C03C\ 3/093$ (2006.01)   $C03C\ 13/00$ (2006.01)

(52) Cooperative Patent Classification (CPC):
**C03C 3/087; C03C 3/091; C03C 3/093; C03C 13/00**

(86) International application number:
**PCT/JP2023/028653**

(87) International publication number:
**WO 2024/034545 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 JP 2022126103**

(71) Applicants:
• **NIPPON SHEET GLASS COMPANY, LIMITED**
**Tokyo 108-6321 (JP)**
• **Nippon Fiber Corporation**
**Abiko-City Chiba 270-1162 (JP)**

(72) Inventors:
• **FUJIWARA Kosuke**
**Tokyo 108-6321 (JP)**
• **NAKAMURA Aya**
**Tokyo 108-6321 (JP)**
• **FUKUCHI Hidetoshi**
**Tokyo 108-6321 (JP)**
• **FUKAZAWA Hiroshi**
**Abiko-shi, Chiba 270-1162 (JP)**
• **SAWA Yoshihiro**
**Abiko-shi, Chiba 270-1162 (JP)**

(74) Representative: **Cabinet Beau de Loménie**
**158, rue de l'Université**
**75340 Paris Cedex 07 (FR)**

(54) **GLASS COMPOSITION, GLASS FIBERS, GLASS FILLER, PRODUCTION METHOD FOR GLASS FIBERS, AND PRODUCTION METHOD FOR GLASS FILLER**

(57)    The present invention provides a glass composition having high elastic modulus and improved acid resistance and alkali resistance. In the glass composition of the present invention, contents of $SiO_2$, $Al_2O_3$, $B_2O_3$, CaO, and T-$Fe_2O_3$ are 50 mass% $\leq SiO_2 + Al_2O_3 \leq$ 66 mass%, 0 mass% $\leq B_2O_3 \leq$ 10 mass%, 5 mass% $\leq$ CaO $\leq$ 30 mass%, and 10 mass% < T-$Fe_2O_3 \leq$ 25 mass%. A mass ratio calculated by $Al_2O_3/(SiO_2+Al_2O_3)$ is 0.05 or more and less than 0.15, and a mass ratio calculated by MgO/(MgO+CaO) is 0.001 or more and 0.20 or less.

FIG.1A

EP 4 570 767 A1

**Description**

TECHNICAL FIELD

The present invention relates to a glass composition, a glass fiber, a glass filler, a glass fiber manufacturing method, and a glass filler manufacturing method.

BACKGROUND ART

Glass including silica ($SiO_2$) as its main raw material has been used since a long time ago to produce bottles and window glass. As a result of the advance of processing techniques, glass is now widely used not only as sheet glass but also as fillers for resin and concrete in the form of glass fibers and scaly glass particles.

The composition of a glass greatly affects the physical properties and the chemical resistance of glass sheets and glass fibers and scaly glass particles produced by processing the glass.

For example, E-glass which has the lowest possible alkaline component ($Na_2O$, $K_2O$) content is excellent in electrical insulation but poor in acid resistance. C-glass which has a higher acid resistance than that of E-glass was created by increasing the $Na_2O$ content. C-glass is however poor in alkali resistance. Later, an alkali-resistance glass (AR-glass) characterized by the inclusion of $ZrO_2$ as its secondary component was developed.

Since having an acid resistance equal to or higher than that of C-glass and also an excellent alkali resistance, AR-glass is suitable as a reinforcing material for concrete. However, AR-glass has less general applicability because $ZrO_2$, one of its constituents, is much more expensive than the other glass raw materials thereof.

These E-glass, C-glass, and AR-glass above leave room for improvement from the viewpoint of their low elastic moduli.

According to Non Patent Literature 1, E-glass, C-glass, and AR-glass are each free of iron oxide or contains less than 1 mass% iron oxide.

Patent Literature 1 discloses, as a highly elastic composition for glass fibers, a composition including components such as $SiO_2$, $Al_2O_3$, $MgO$, $Fe_2O_3$, $TiO_2$, $CaO$, etc.

CITATION LIST

Patent Literature

Patent Literature 1: JP 2020-529378 A

Non Patent Literature

Non Patent Literature 1: edited by Masayuki YAMANE, et al., "Glass Engineering Handbook (popular edition)", first edition, Asakura Publishing Co., Ltd., 1999, p. 514

SUMMARY OF INVENTION

Technical Problem

Conventional glass compositions are required to have high elastic modulus and improved acid resistance and alkali resistance.

It is therefore an object of the present invention to provide a glass composition having high elastic modulus and improved acid resistance and alkali resistance.

Solution to Problem

Through intensive studies, the present inventors found that a glass composition having high elastic modulus and improved acid resistance and alkali resistance can be obtained by appropriately adjusting, of components included in a glass composition, contents of $SiO_2$, $Al_2O_3$, $B_2O_3$, $CaO$, and $T\text{-}Fe_2O_3$ and mass ratios calculated by $Al_2O_3/(SiO_2+Al_2O_3)$ and $MgO/(MgO+CaO)$, and have completed the present invention.

The present inventors also found that a glass composition as described above can be efficiently obtained at a low price by using coal ash (fly ash) as a raw material.

The present invention provides a glass composition wherein

contents of $SiO_2$, $Al_2O_3$, $B_2O_3$, $CaO$, and $T\text{-}Fe_2O_3$ are
50 mass% $\leq SiO_2+Al_2O_3 \leq$ 66 mass%,
0 mass% $\leq B_2O_3 \leq$ 10 mass%,
5 mass% $\leq CaO \leq$ 30 mass%, and
10 mass% $< T\text{-}Fe_2O_3 \leq$ 25 mass%,
a mass ratio calculated by $Al_2O_3/(SiO_2+Al_2O_3)$ is 0.05 or more and less than 0.15, and
a mass ratio calculated by $MgO/(MgO+CaO)$ is 0.001 or more and 0.20 or less.

The present invention further provides a glass fiber formed from the above glass composition.

The present invention further provides a glass filler formed from the above glass composition.

The present invention further provides a glass fiber manufacturing method including:

melting the above glass composition; and
spinning the molten glass composition into a glass fiber.

The present invention further provides a glass filler manufacturing method including:

melting the above glass composition; and
shaping the molten glass composition into a glass filler.

Advantageous Effects of Invention

The present invention can provide a glass composition having high elastic modulus and improved acid resistance and alkali resistance.

BRIEF DESCRIPTION OF DRAWINGS

FIG. 1A is a perspective view schematically showing an example of a scaly glass particle.
FIG. 1B is a plan view showing the scaly glass particle of FIG. 1A viewed from a top surface thereof.
FIG. 2 is a schematic diagram for illustrating an exemplary apparatus for manufacturing a scaly glass particle and an exemplary method for manufacturing a scaly glass particle.
FIG. 3 is a schematic diagram for illustrating another exemplary apparatus for manufacturing a scaly glass particle and another exemplary method for manufacturing a scaly glass particle.
FIG. 4 is a schematic diagram for illustrating an exemplary spinning apparatus available for manufacturing a chopped strand.
FIG. 5 is a schematic diagram for illustrating an exemplary apparatus for manufacturing a chopped strand from a wound strand body obtained from the spinning apparatus shown in FIG. 4.
FIG. 6A is a perspective view showing an exemplary concrete product.
FIG. 6B is an enlarged cross-sectional view of the concrete product shown in FIG. 6A.
FIG. 7 shows another exemplary concrete product.
FIG. 8 shows an example of a structure of a rubber belt including a rubber-reinforcing cord.

DESCRIPTION OF EMBODIMENTS

Hereinafter, the present invention will be described in detail. The following description is not intended to limit the present invention to specific embodiments.

[Glass composition]

<Composition>

In a glass composition of the present invention,

contents of $SiO_2$, $Al_2O_3$, $B_2O_3$, $CaO$, and $T\text{-}Fe_2O_3$ are
50 mass% $\leq SiO_2+Al_2O_3 \leq$ 66 mass%,
0 mass% $\leq B_2O_3 \leq$ 10 mass%,

$5 \text{ mass\%} \leq \text{CaO} \leq 30 \text{ mass\%}$, and
$10 \text{ mass\%} < \text{T-Fe}_2\text{O}_3 \leq 25 \text{ mass\%}$,
a mass ratio calculated by $\text{Al}_2\text{O}_3/(\text{SiO}_2+\text{Al}_2\text{O}_3)$ is 0.05 or more and less than 0.15, and
a mass ratio calculated by $\text{MgO}/(\text{MgO}+\text{CaO})$ is 0.001 or more and 0.20 or less.

In the glass composition, iron oxide is commonly present as $\text{Fe}_2\text{O}_3$ or FeO. Iron oxide present as FeO is calculated as $\text{Fe}_2\text{O}_3$. A sum of a content of the FeO calculated as $\text{Fe}_2\text{O}_3$ and a content of iron oxide present as $\text{Fe}_2\text{O}_3$ is defined as a total iron oxide content in the glass composition. Total iron oxide is referred to as $\text{T-Fe}_2\text{O}_3$ according to the custom.

In the glass composition of the present invention, $\text{SiO}_2$ and $\text{Al}_2\text{O}_3$ are primary components forming a glass network of the glass composition. CaO is a component reducing the melt viscosity of the glass composition and increasing the elasticity of the glass composition. $\text{Fe}_2\text{O}_3$ is a component increasing the elasticity of the glass composition. MgO is a component improving the acid resistance of the glass composition.

Hereinafter, in the present specification, being "substantially free of" a component means that the content of the component is less than 0.1 mass%, preferably less than 0.05 mass%, more preferably less than 0.01 mass%, even more preferably less than 0.005 mass%, particularly preferably less than 0.003 mass%, and most preferably less than 0.001 mass%. Preferred ranges of the contents, properties, etc. of the components can be adopted by combining the upper and lower limits described below individually.

In the present invention, there is no substantial difference between a proportion of the components in a mixture obtained by blending raw materials and a proportion of the components in the glass composition obtained by melting the mixture. Therefore, the proportion of the components in the above mixture can be considered a proportion of the components of the materials in the glass composition.

The glass composition of the present invention is obtained by adjusting a blending proportion of the raw materials to give a mixture in which the contents of $\text{SiO}_2$, $\text{Al}_2\text{O}_3$, $\text{B}_2\text{O}_3$, CaO, and $\text{T-Fe}_2\text{O}_3$ and the mass ratios $\text{Al}_2\text{O}_3/(\text{SiO}_2+\text{Al}_2\text{O}_3)$ and $\text{MgO}/(\text{MgO}+\text{CaO})$ are in the above ranges and then crushing, melting, and solidifying the mixture.

The components of the glass composition will be described hereinafter in details.

($\text{SiO}_2$)

$\text{SiO}_2$ is a component forming a glass network of the glass composition. Moreover, $\text{SiO}_2$ is a component for adjusting the devitrification temperature and the viscosity during glass composition production and for improving the acid resistance of the glass composition. The lower limit of the $\text{SiO}_2$ content in the glass composition is, for example, 45 mass% or more, and is preferably more than 45 mass%, 46 mass% or more, 47 mass% or more, 48 mass% or more, 49 mass% or more, 50 mass% or more, 51 mass% or more, 52 mass% or more, 53 mass% or more, or 54 mass% or more. The upper limit of the $\text{SiO}_2$ content is, for example, 62 mass% or less, and is preferably less than 62 mass%, 60 mass% or less, 59 mass% or less, 58 mass% or less, or 57 mass% or less. The $\text{SiO}_2$ content is, for example, $45 \text{ mass\%} \leq \text{SiO}_2 \leq 62 \text{ mass\%}$.

($\text{Al}_2\text{O}_3$)

$\text{Al}_2\text{O}_3$ is a component forming a glass network of the glass composition. Moreover, $\text{Al}_2\text{O}_3$ is a component for adjusting the devitrification temperature and the viscosity during glass composition production and for improving the water resistance of the glass composition. However, too much $\text{Al}_2\text{O}_3$ decreases the acid resistance and the alkali resistance of the glass composition. The lower limit of the $\text{Al}_2\text{O}_3$ content is, for example, 3 mass% or more, and is preferably 4 mass% or more, 4.5 mass% or more, 5 mass% or more, 5.5 mass% or more, or 6 mass% or more. The upper limit of the $\text{Al}_2\text{O}_3$ is, for example, 9.5 mass% or less, and is preferably 9 mass% or less, 8.5 mass% or less, 8 mass% or less, 7.5 mass% or less, or 7 mass% or less.

($\text{SiO}_2+\text{Al}_2\text{O}_3$)

In the present invention, a sum ($\text{SiO}_2+\text{Al}_2\text{O}_3$) of the $\text{SiO}_2$ content and the $\text{Al}_2\text{O}_3$ content is very important because the sum ($\text{SiO}_2+\text{Al}_2\text{O}_3$) affects the physical properties of the glass composition. For example, in the case where ($\text{SiO}_2+\text{Al}_2\text{O}_3$) in the glass composition is less than 50 mass% or more than 66 mass%, the viscosity and the devitrification temperature are so high that it tends to be difficult to obtain a homogeneous glass. Furthermore, in this case, too high a melting point of the raw material formulation tends to make it difficult to maintain uniformity of a composition of a melt in a melting furnace in mass production of the glass composition using the melting furnace. Therefore, ($\text{SiO}_2+\text{Al}_2\text{O}_3$) in the glass composition is 50 mass% or more and 66 mass% or less. The lower limit of ($\text{SiO}_2+\text{Al}_2\text{O}_3$) is, for example, 52 mass% or more, and is preferably 53 mass% or more, 54 mass% or more, or 55 mass% or more. On the other hand, the upper limit of ($\text{SiO}_2+\text{Al}_2\text{O}_3$) is, for example, 65 mass% or less, and is preferably 64 mass% or less, 63 mass% or less, 62 mass% or less, or 61 mass% or less. In particular, in the case where $(SiO_2+Al_2O_3)$ is 62 mass% or less, it is likely that the working temperature, described later, of the glass composition can be lowered further.

$(Al_2O_3/(SiO_2+Al_2O_3))$

In the glass composition of the present invention, the ratio $Al_2O_3/(SiO_2+Al_2O_3)$ (mass basis) of the $Al_2O_3$ content to the sum $(SiO_2+Al_2O_3)$ of the $SiO_2$ content and the $Al_2O_3$ content is 0.05 or more and less than 0.15. If $Al_2O_3/(SiO_2+Al_2O_3)$ is less than 0.05 or 0.15 or more, the acid resistance and the alkali resistance of the glass composition tend to be inferior. Moreover, in this case, too high a melting point of the raw material formulation tends to make it difficult to maintain uniformity of a composition of a melt in a melting furnace in mass production of the glass composition using the melting furnace. Furthermore, if $Al_2O_3/(SiO_2+Al_2O_3)$ is less than 0.05, the glass composition tends to undergo phase separation. The lower limit of $Al_2O_3/(SiO_2+Al_2O_3)$ is, for example, 0.06 or more, and is preferably 0.07 or more, 0.08 or more, 0.09 or more, or 0.10 or more. On the other hand, the upper limit of $Al_2O_3/(SiO_2+Al_2O_3)$ is, for example, 0.14 or less, and is preferably 0.13 or less, 0.12 or less, or 0.11 or less.

(CaO)

The CaO content in the glass composition of the present invention is 5 mass% or more and 30 mass% or less. If the CaO content in the glass composition is less than 5 mass%, the devitrification temperature is so high that it tends to be difficult to obtain a homogeneous glass. On the other hand, if the CaO content in the glass composition is more than 30 mass%, the viscosity of the melt is so low that the formability thereof tends to be insufficient. The lower limit of the CaO content is, for example, 8 mass% or more, and is preferably 10 mass% or more, 12 mass% or more, 13 mass% or more, 14 mass% or more, 15 mass% or more, 16 mass% or more, 17 mass% or more, 18 mass% or more, 19 mass% or more, or 20 mass% or more. On the other hand, the upper limit of the CaO content is, for example, 28 mass% or less, and is preferably 26 mass% or less, 25 mass% or less, or 24 mass% or less.

$(Fe_2O_3)$

$Fe_2O_3$ plays an important role in the glass composition of the present invention. That is, when the $Fe_2O_3$ content in the glass composition is in an appropriate range, the glass composition has improved acid resistance and alkali resistance. Furthermore, $Fe_2O_3$ improves the elastic modulus of the glass composition. However, too much $Fe_2O_3$ in the glass composition can decrease the acid resistance and the alkali resistance and can cause devitrification. Hence, the T-$Fe_2O_3$ (total iron oxide calculated as $Fe_2O_3$) content in the glass composition is more than 10 mass% and 25 mass% or less. The lower limit of the T-$Fe_2O_3$ content in the glass composition is, for example, 10.1 mass% or more, and is preferably 10.5 mass% or more, 11 mass% or more, 12 mass% or more, 13 mass% or more, 14 mass% or more, 15 mass% or more, 15.5 mass% or more, or 16 mass% or more. The upper limit of the T-$Fe_2O_3$ content is, for example, 23 mass% or less, and is preferably 21 mass% or less, 20 mass% or less, 19 mass% or less, or 18 mass% or less. The T-$Fe_2O_3$ content is, for example, 11 mass% $\leq$ T-$Fe_2O_3$ $\leq$ 25 mass%.

(MgO)

The glass composition of the present invention includes MgO. Inclusion of an appropriate amount of MgO improves the acid resistance of the glass composition. However, too much MgO is likely to cause devitrification of the glass composition and decrease the alkali resistance of the glass composition. The glass composition of the present invention tends to have a high elastic modulus as a result of appropriate adjustment of the $Fe_2O_3$ content and the MgO content. The lower limit of the MgO content is, for example, 0.01 mass% or more, and is preferably 0.05 mass% or more, 0.1 mass% or more, 0.15 mass% or more, or 0.2 mass% or more. The upper limit of the MgO content is, for example, 10 mass% or less, and is preferably 8 mass% or less, 6 mass% or less, 5 mass% or less, 4 mass% or less, 3 mass% or less, or 2 mass% or less. The MgO content is, for example, 0.1 mass% $\leq$ MgO $\leq$ 10 mass%.

(MgO+CaO)

In the present invention, the sum (MgO+CaO) of the MgO content and the CaO content affects the physical properties of the glass composition. For example, if (MgO+CaO) in the glass composition is less than 5 mass%, the devitrification temperature is so high that it tends to be difficult to obtain a homogeneous glass. On the other hand, if (MgO+CaO) is more than 30 mass%, the viscosity of the melt is so low that the formability thereof can be deteriorated. The lower limit of (MgO+CaO) is, for example, 5 mass% or more, and is preferably 8 mass% or more, 10 mass% or more, 11 mass% or more, 12 mass% or more, 13 mass% or more, 14 mass% or more, 15 mass% or more, 16 mass% or more, 17 mass% or more, 18 mass% or more, 19 mass% or more, 20 mass% or more, 20.1 mass% or more, or 20.2 mass% or more. On the other hand, the upper limit of (MgO+CaO) is, for example, 30 mass% or less, and is preferably 28 mass% or less, 27 mass% or less, 26 mass% or less, 25 mass% or less, 24.5 mass% or less, or 24 mass% or less.

**(MgO/(MgO+CaO))**

In the glass composition of the present invention, the ratio $MgO/(MgO+CaO)$ (mass basis) of the MgO content to the sum $(MgO+CaO)$ of the MgO content and the CaO content is 0.001 or more and 0.20 or less. If $MgO/(MgO+CaO)$ is more than 0.20, it is likely to cause devitrification of the glass composition and decrease the alkali resistance of the glass composition. On the other hand, if $MgO/(MgO+CaO)$ is less than 0.001, the acid resistance improvement effect of MgO tends to be insufficient. The lower limit of $MgO/(MgO+CaO)$ is, for example, 0.002 or more, and is preferably 0.003 or more, 0.004 or more, 0.005 or more, 0.006 or more, 0.007 or more, 0.008 or more, 0.009 or more, 0.01 or more, 0.011 or more, 0.012 or more, 0.013 or more, 0.014 or more, 0.015 or more, 0.016 or more, 0.017 or more, 0.018 or more, 0.019 or more, or 0.02 or more. On the other hand, the upper limit of $MgO/(MgO+CaO)$ is, for example, 0.18 or less, and is preferably 0.16 or less, 0.15 or less, 0.14 or less, 0.13 or less, 0.12 or less, 0.11 or less, or 0.10 or less. In some cases, the upper limit of $MgO/(MgO+CaO)$ may be 0.05 or less, 0.02 or less, 0.015 or less, or 0.01 or less.
Other than the above components, the glass composition of the present invention may include the following components.

**($B_2O_3$)**

$B_2O_3$ is a component forming a glass network of the glass composition as $SiO_2$ and $Al_2O_3$ are. By including $B_2O_3$ in the glass composition, the viscosity during melting can be in a range suitable for production of glass. Therefore, the glass composition of the present invention may include $B_2O_3$. However, too much $B_2O_3$ in the glass composition decreases the acid resistance and the alkali resistance, and tends to cause devitrification and phase separation. The $B_2O_3$ content in the glass composition of the present invention is 0 mass% or more and 10 mass% or less. The lower limit of the $B_2O_3$ content is, for example, 0.1 mass% or more, and is preferably 0.2 mass% or more. The upper limit of the $B_2O_3$ content is, for example, 8 mass% or less, and is preferably 6 mass% or less, 4 mass% or less, 2 mass% or less, or 1 mass% or less. The $B_2O_3$ content may be 0.1 mass% $\leq B_2O_3 \leq$ 10 mass%. Incidentally, the glass composition may be substantially free of $B_2O_3$.

**($SiO_2+B_2O_3$)**

In the present invention, a sum $(SiO_2+B_2O_3)$ of the $SiO_2$ content and the $B_2O_3$ content affects the physical properties of the glass composition. In one example, in the case where $(SiO_2+B_2O_3)$ in the glass composition is less than 50 mass% or more than 66 mass%, the devitrification temperature is high such that it tends to be difficult to obtain a homogeneous glass. Furthermore, in this case, too high a melting point of the raw material formulation can make it difficult to maintain uniformity of a composition of a melt in a melting furnace in mass production of the glass composition using the melting furnace. Therefore, $(SiO_2+B_2O_3)$ in the glass composition is preferably 50 mass% or more and 66 mass% or less. The lower limit of $(SiO_2+B_2O_3)$ is, for example, 52 mass% or more, and is preferably 53 mass% or more, 54 mass% or more, or 55 mass% or more. On the other hand, the upper limit of $(SiO_2+B_2O_3)$ is, for example, 65 mass% or less, and is preferably 64 mass% or less, 63 mass% or less, 62 mass% or less, 61 mass% or less, 60 mass% or less, 59 mass% or less, 58 mass% or less, or 57 mass% or less.

**($Li_2O$, $Na_2O$, $K_2O$)**

Alkali metal oxides ($Li_2O$, $Na_2O$, $K_2O$) decrease the melting point of the glass composition and increase the flowability of the melt. Therefore, the alkali metal oxides facilitate maintenance of uniformity of a composition of a melt in a melting furnace in mass production of the glass composition using the melting furnace. Therefore, the glass composition of the present invention can include appropriate amounts of the alkali metal oxides ($Li_2O$, $Na_2O$, $K_2O$). However, too much alkali metal oxides can decrease the Young's modulus and the alkali resistance and can cause devitrification.
The upper limit of the $Li_2O$ content is, for example, 5 mass% or less, and is preferably 4 mass% or less, 3 mass% or less, 2 mass% or less, less than 1 mass%, 0.9 mass% or less, 0.8 mass% or less, 0.7 mass% or less, 0.6 mass% or less, or 0.5 mass% or less.
The lower limit of the $Na_2O$ content is, for example, 0.01 mass% or more, and is preferably 0.05 mass% or more, 0.1 mass% or more, or 0.2 mass% or more. The upper limit of the $Na_2O$ content is, for example, 5 mass% or less, and is preferably 4 mass% or less, 3 mass% or less, 2 mass% or less, less than 1 mass%, 0.9 mass% or less, 0.8 mass% or less, 0.7 mass% or less, 0.6 mass% or less, or 0.5 mass% or less.
The lower limit of the $K_2O$ content is, for example, 0.05 mass% or more, and is preferably 0.1 mass% or more, or 0.2 mass% or more. The upper limit of the $K_2O$ content is, for example, 5 mass% or less, and is preferably 4 mass% or less, less than 3 mass%, 2 mass% or less, less than 1 mass%, 0.9 mass% or less, 0.8 mass% or less, 0.7 mass% or less, 0.6 mass% or less, or 0.5 mass% or less.

The lower limit of a sum ($Na_2O+K_2O$) of the $Na_2O$ content and the $K_2O$ content is, for example, 0.1 mass% or more, and is preferably 0.2 mass% or more. The upper limit of ($Na_2O+K_2O$) is, for example, 5 mass% or less, and is preferably 4 mass% or less, 3 mass% or less, 2 mass% or less, less than 1 mass%, 0.9 mass% or less, or 0.8 mass% or less.

The lower limit of a total content ($Li_2O+Na_2O+K_2O$) of the alkali metal oxides is, for example, 0.1 mass% or more, and is preferably 0.2 mass% or more. The upper limit of ($Li_2O+Na_2O+K_2O$) is, for example, 5 mass% or less, and is preferably 4 mass% or less, 3 mass% or less, 2 mass% or less, less than 1 mass%, 0.9 mass% or less, or 0.8 mass% or less. The total content of $Li_2O$, $Na_2O$, and $K_2O$ is, for example, 0.1 mass% $\leq Li_2O+Na_2O+K_2O \leq 5$ mass%.

(SrO)

The glass composition of the present invention may include SrO. By including SrO in the glass composition, the devitrification temperature and the viscosity during melting can be in ranges suitable for production of glass. On the other hand, too much SrO in the glass composition decreases the Young's modulus, the acid resistance, and the alkali resistance of the glass composition. Therefore, the upper limit of the SrO content in the glass composition is, for example, 15 mass% or less, and is preferably 12 mass% or less, 10 mass% or less, 9 mass% or less, 8 mass% or less, 7 mass% or less, 6 mass% or less, 5 mass% or less, 4 mass% or less, 3 mass% or less, 2 mass% or less, 1 mass% or less, 0.5 mass% or less, or 0.1 mass% or less. The glass composition may be substantially free of SrO. In some cases, the lower limit of the SrO content is, for example, 0.1 mass% or more, and may be 0.5 mass% or more, or 1 mass% or more. The SrO content may be 0.1 mass% $\leq$ SrO $\leq$ 10 mass%.

(BaO)

The glass composition of the present invention may include BaO. By including BaO in the glass composition, the devitrification temperature and the viscosity during melting can be in ranges suitable for production of glass. On the other hand, too much BaO in the glass composition decreases the Young's modulus, the acid resistance, and the alkali resistance of the glass composition. Therefore, the upper limit of the BaO content in the glass composition is, for example, 10 mass% or less, and is preferably 8 mass% or less, 6 mass% or less, 4 mass% or less, 2 mass% or less, 1 mass% or less, 0.5 mass% or less, or 0.1 mass% or less. The glass composition may be substantially free of BaO.

(ZnO)

The glass composition of the present invention may include ZnO. By including ZnO in the glass composition, the devitrification temperature and the viscosity during melting can be in ranges suitable for production of glass. On the other hand, too much ZnO in the glass composition decreases the Young's modulus, the acid resistance, and the alkali resistance of the glass composition. Therefore, the upper limit of the ZnO content in the glass composition is, for example, 10 mass% or less, and is preferably 8 mass% or less, 6 mass% or less, 4 mass% or less, 3 mass% or less, 2 mass% or less, 1 mass% or less, 0.5 mass% or less, or 0.1 mass% or less. The glass composition may be substantially free of ZnO.

($TiO_2$)

The glass composition of the present invention may include $TiO_2$. By including $TiO_2$ in the glass composition, the viscosity during melting can be in a range suitable for production of glass. On the other hand, too much $TiO_2$ in the glass composition is likely to cause devitrification. Therefore, the upper limit of the $TiO_2$ content in the glass composition is, for example, 10 mass% or less, and is preferably 5 mass% or less, 4 mass% or less, 3 mass% or less, 2 mass% or less, 1 mass% or less, or 0.5 mass% or less. The lower limit of the $TiO_2$ content is, for example, 0.1 mass% or more, and may be 0.2 mass% or more. The glass composition may be substantially free of $TiO_2$. The $TiO_2$ content may be 0.1 mass% $\leq TiO_2 \leq$ 10 mass%.

($ZrO_2$)

The glass composition of the present invention may include $ZrO_2$. By including $ZrO_2$ in the glass composition, the viscosity during melting can be in a range suitable for production of glass. On the other hand, too much $ZrO_2$ in the glass composition is likely to cause devitrification. Therefore, the upper limit of the $ZrO_2$ content in the glass composition is, for example, 10 mass% or less, and is preferably 9 mass% or less, 8 mass% or less, 7 mass% or less, 6 mass% or less, 5 mass% or less, 4 mass% or less, 3 mass% or less, 2 mass% or less, 1 mass% or less, 0.5 mass% or less, or 0.1 mass% or less. The glass composition may be substantially free of $ZrO_2$. In some cases, the lower limit of the $ZrO_2$ content is, for example, 0.1 mass% or more, and may be 0.2 mass% or more. The $ZrO_2$ content may be 0.1 mass% $\leq ZrO_2 \leq$ 10 mass%.

($MnO_2$)

The glass composition of the present invention may include $MnO_2$. By including $MnO_2$ in the glass composition, the viscosity during melting can be in a range suitable for production of glass. On the other hand, too much $MnO_2$ in the glass composition is likely to cause devitrification. Therefore, the upper limit of the T-$MnO_2$ (total manganese oxide calculated as $MnO_2$) content in the glass composition is, for example, 5 mass% or less, and is preferably 2 mass% or less, 1 mass% or less, 0.5 mass% or less, or 0.1 mass% or less. The glass composition may be substantially free of T-$MnO_2$.

(Additional components)

The glass composition of the present invention may include at least one additional component selected from the group consisting of $P_2O_5$, $PbO$, $Bi_2O_3$, $La_2O_3$, $WO_3$, $Nb_2O_5$, $Y_2O_3$, $MoO_3$, $Ta_2O_5$, $Cr_2O_3$, $CuO$, and $CoO$, and a content of each additional component may be 0 mass% or more and 5 mass% or less. An acceptable content of each of these components is, for example, less than 2 mass%, and may be less than 1 mass%, less than 0.5 mass%, or less than 0.1 mass%. A sum of the acceptable contents of these components is, for example, 5 mass% or less, and may be less than 2 mass%, less than 1 mass%, less than 0.5 mass%, or less than 0.1 mass%. Note that the glass composition may be substantially free of each of these additional components.

The glass composition of the present invention may include at least one additive selected from the group consisting of $SO_3$, $F_2$, $Cl_2$, $Br_2$, $I_2$, $SnO_2$, $CeO_2$, $As_2O_3$, and $Sb_2O_3$, and a content of each additive may be 0 mass% or more and 1 mass% or less. An acceptable content of each of these components is, for example, less than 0.5 mass%, and may be less than 0.2 mass%, or less than 0.1 mass%. A sum of the acceptable contents of these components is, for example, 1 mass% or less, and may be less than 0.5 mass%, less than 0.2 mass%, or less than 0.1 mass%. Note that the glass composition may be substantially free of each of the above additives.

The glass composition of the present invention may include at least one selected from the group consisting of $H_2O$, $OH$, $H_2$, $CO_2$, $CO$, $He$, $Ne$, $Ar$, and $N_2$, and a content of each component may be 0 mass% or more and 0.1 mass% or less. An acceptable content of each of these components is, for example, less than 0.05 mass%, and may be less than 0.03 mass%, or less than 0.01 mass%. A sum of the acceptable contents of these components is, for example, 0.1 mass% or less, and may be less than 0.05 mass%, less than 0.03 mass%, or less than 0.01 mass%. Note that the glass composition may be substantially free of each of the above components.

The glass composition of the present invention may include a small amount of a noble metal element. For example, a content of each of noble metal elements such as Pt, Rh, Au, and Os may be 0 mass% or more and 0.1 mass% or less. An acceptable content of each of these components is, for example, less than 0.1 mass%, and may be less than 0.05 mass%, less than 0.03 mass%, or less than 0.01 mass%. A sum of the acceptable contents of these components is, for example, 0.1 mass% or less, and may be less than 0.05 mass%, less than 0.03 mass%, or even less than 0.01 mass%. Note that the glass composition may be substantially free of each of the above noble metal elements.

In a preferred example of the glass composition of the present invention,

the contents of $SiO_2$, $Al_2O_3$, $B_2O_3$, $CaO$, and T-$Fe_2O_3$ are
45 mass% $\leq SiO_2 \leq$ 62 mass%,
50 mass% $\leq SiO_2+Al_2O_3 \leq$ 66 mass%,
0 mass% $\leq B_2O_3 \leq$ 10 mass%,
5 mass% $\leq CaO \leq$ 30 mass%, and
10 mass% < T-$Fe_2O_3 \leq$ 25 mass%,
the mass ratio calculated by $Al_2O_3/(SiO_2+Al_2O_3)$ is 0.05 or more and less than 0.15, and
the mass ratio calculated by $MgO/(MgO+CaO)$ is 0.001 or more and 0.20 or less.

In another preferred example of the glass composition of the present invention,

the contents of $SiO_2$, $Al_2O_3$, $B_2O_3$, $CaO$, and T-$Fe_2O_3$ are
50 mass% $\leq SiO_2+Al_2O_3 \leq$ 66 mass%,
0.1 mass% $\leq B_2O_3 \leq$ 10 mass%,
5 mass% $\leq CaO \leq$ 30 mass%, and
10 mass% < T-$Fe_2O_3 \leq$ 25 mass%,
the mass ratio calculated by $Al_2O_3/(SiO_2+Al_2O_3)$ is 0.05 or more and less than 0.15, and

the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, MgO, CaO, and $T\text{-}Fe_2O_3$ are
50 mass% $\leq SiO_2+Al_2O_3 \leq$ 66 mass%,
0 mass% $\leq B_2O_3 \leq$ 10 mass%,
0.1 mass% $\leq$ MgO $\leq$ 10 mass%,
5 mass% $\leq$ CaO $\leq$ 30 mass%, and
10 mass% $< T\text{-}Fe_2O_3 \leq$ 25 mass%,
the mass ratio calculated by $Al_2O_3/(SiO_2+Al_2O_3)$ is 0.05 or more and less than 0.15, and
the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, CaO, $TiO_2$, and $T\text{-}Fe_2O_3$ are
50 mass% $\leq SiO_2+Al_2O_3 \leq$ 66 mass%,
0 mass% $\leq B_2O_3 \leq$ 10 mass%,
5 mass% $\leq$ CaO $\leq$ 30 mass%,
0.1 mass% $\leq$ SrO $\leq$ 15 mass%, and
10 mass% $< T\text{-}Fe_2O_3 \leq$ 25 mass%,
the mass ratio calculated by $Al_2O_3/(SiO_2+Al_2O_3)$ is 0.05 or more and less than 0.15, and
the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, CaO, $TiO_2$, and $T\text{-}Fe_2O_3$ are
50 mass% $\leq SiO_2+Al_2O_3 \leq$ 66 mass%,
0 mass% $\leq B_2O_3 \leq$ 10 mass%,
5 mass% $\leq$ CaO $\leq$ 30 mass%,
0.1 mass% $\leq TiO_2 \leq$ 10 mass%, and
10 mass% $< T\text{-}Fe_2O_3 \leq$ 25 mass%,
the mass ratio calculated by $Al_2O_3/(SiO_2+Al_2O_3)$ is 0.05 or more and less than 0.15, and
the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, CaO, $ZrO_2$, and $T\text{-}Fe_2O_3$ are
50 mass% $\leq SiO_2+Al_2O_3 \leq$ 66 mass%,
0 mass% $\leq B_2O_3 \leq$ 10 mass%,
5 mass% $\leq$ CaO $\leq$ 30 mass%,
0.1 mass% $\leq ZrO_2 \leq$ 10 mass%, and
10 mass% $< T\text{-}Fe_2O_3 \leq$ 25 mass%,
the mass ratio calculated by $Al_2O_3/(SiO_2+Al_2O_3)$ is 0.05 or more and less than 0.15, and
the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, CaO, $Li_2O$, $Na_2O$, $K_2O$, and $T\text{-}Fe_2O_3$ are
50 mass% $\leq SiO_2+Al_2O_3 \leq$ 66 mass%,
0 mass% $\leq B_2O_3 \leq$ 10 mass%,
5 mass% $\leq$ CaO $\leq$ 30 mass%,
0.1 mass% $\leq Li_2O+Na_2O+K_2O \leq$ 5 mass%, and
10 mass% $< T\text{-}Fe_2O_3 \leq$ 25 mass%,
the mass ratio calculated by $Al_2O_3/(SiO_2+Al_2O_3)$ is 0.05 or more and less than 0.15, and
the mass ratio calculated by MgO/(MgO+CaO) is 0.001 or more and 0.20 or less.

In another preferred example of the glass composition of the present invention,

the contents of $SiO_2$, $Al_2O_3$, $B_2O_3$, CaO, and $T\text{-}Fe_2O_3$ are
50 mass% $\leq$ $SiO_2$+$Al_2O_3$ $\leq$ 66 mass%,
0 mass% $\leq$ $B_2O_3$ $\leq$ 10 mass%,
50 mass% $\leq$ $SiO_2$+$B_2O_3$ $\leq$ 66 mass%,
5 mass% $\leq$ CaO $\leq$ 30 mass%, and
10 mass% $<$ $T\text{-}Fe_2O_3$ $\leq$ 25 mass%,
the mass ratio calculated by $Al_2O_3/(SiO_2+Al_2O_3)$ is 0.05 or more and less than 0.15, and
the mass ratio calculated by $MgO/(MgO+CaO)$ is 0.001 or more and 0.20 or less.

In another preferred example of the glass composition of the present invention,

the contents of $SiO_2$, $Al_2O_3$, $B_2O_3$, CaO, and $T\text{-}Fe_2O_3$ are
50 mass% $\leq$ $SiO_2$+$Al_2O_3$ $\leq$ 66 mass%,
0 mass% $\leq$ $B_2O_3$ $\leq$ 10 mass%,
5 mass% $\leq$ CaO $\leq$ 30 mass%, and
11 mass% $\leq$ $T\text{-}Fe_2O_3$ $\leq$ 25 mass%,
the mass ratio calculated by $Al_2O_3/(SiO_2+Al_2O_3)$ is 0.05 or more and less than 0.15, and
the mass ratio calculated by $MgO/(MgO+CaO)$ is 0.001 or more and 0.20 or less.

<Glass raw material>

Raw materials used to obtain the glass composition of the present invention are not limited to particular ones as long as the contents of the components are in the above composition ranges. In particular, coal ash is preferably used as one of the raw materials. In other words, the glass composition of the present invention preferably includes coal ash as a raw material. Note that coal ash does not have to be used.

<Properties>

Properties of the glass composition of the present invention will be described hereinafter.

(Young's modulus)

The higher Young's modulus the glass composition has, the higher elasticity the glass composition has. The glass composition having a high Young's modulus can improve mechanical properties of the composite material reinforced with a glass fiber or a glass filler. The Young's modulus (GPa) of a glass can be determined from a longitudinal wave velocity and a transverse wave velocity measured by a common ultrasonic method for an elastic wave propagating through the glass and the density separately measured for the glass by Archimedes' principle. The lower limit of the Young's modulus is, for example, 85 GPa or more, and may be 86 GPa or more, 87 GPa or more, 88 GPa or more, or 89 GPa or more. The upper limit of the Young's modulus is, for example, 100 GPa or less, and may be 99 GPa or less, 98 GPa or less, 97 GPa or less, 96 GPa or less, 95 GPa or less, or 94 GPa or less.

(Glass transition temperature)

A glass transition temperature (glass-transition point) is a measure of the thermal resistance of the glass. The lower limit of the glass transition temperature can be 560°C or higher, 580°C or higher, 600°C or higher, 610°C or higher, 620°C or higher, 630°C or higher, 640°C or higher, 650°C or higher, 660°C or higher, or even 670°C or higher. The upper limit of the glass transition temperature can be 800°C or lower, 780°C or lower, 760°C or lower, 750°C or lower, 740°C or lower, or even 730°C or lower.

(Melting properties)

A temperature at which the viscosity of a molten glass is 1000 dPa•sec (1000 poise) is called a working temperature of the glass, and is a temperature most suitable for obtaining a glass fiber and a glass filler. In the case of manufacturing a scaly glass particle or a glass fiber as a glass filler or a glass fiber, unevenness of the thickness of the scaly glass particle or the diameter of the glass fiber can be reduced when the glass has a working temperature of 1000°C or higher. When the working temperature is 1450°C or lower, the fuel cost required for glass melting can be reduced, and a glass manufacturing apparatus is less eroded by heat to have an extended life span. The lower limit of the working temperature is, for example, 1000°C or higher, and may be 1050°C or higher, or 1100°C or higher. The upper limit of the working temperature is, for example, 1450°C or lower, and may be 1400°C or lower, 1350°C or lower, 1300°C or lower, 1250°C or lower, 1200°C or lower, 1190°C or lower, 1180°C or lower, 1170°C or lower, 1160°C or lower, 1150°C or lower, or 1140°C or lower.

(Chemical resistance)

A mass reduction rate $\Delta W_1$ described later is adopted as a measure of the acid resistance. The smaller the mass reduction rate $\Delta W_1$ is, the higher the acid resistance is. When the glass composition is to be used as a reinforcing material for a composite material, the mass reduction rate $\Delta W_1$ of the glass composition is preferably 0.50 mass% or less. The mass reduction rate $\Delta W_1$ of the glass composition of the present invention is, for example, 0.40 mass% or less, is preferably 0.30 mass% or less, 0.20 mass% or less, 0.17 mass% or less, 0.15 mass% or less, 0.10 mass% or less, or even 0.05 mass% or less. The lower limit of the mass reduction rate $\Delta W_1$ is, for example, but not particularly limited to 0.02 mass% or more.

A mass reduction rate $\Delta W_2$ described later is adopted as a measure of the alkali resistance. The smaller the mass reduction rate $\Delta W_2$ is, the higher the alkali resistance is. When the glass composition is to be used as a reinforcing material for a composite material, the mass reduction rate $\Delta W_2$ of the glass composition is preferably 0.50 mass% or less. The mass reduction rate $\Delta W_2$ of the glass composition of the present invention is, for example, 0.40 mass% or less, and is preferably 0.30 mass% or less, 0.20 mass% or less, 0.18 mass% or less, 0.15 mass% or less, 0.10 mass% or less, or even 0.05 mass% or less. The lower limit of the mass reduction rate $\Delta W_2$ is, for example, but not particularly limited to 0.03 mass% or more.

[Glass fiber]

A glass fiber of the present embodiment is formed from the above glass composition. The glass fiber of the present embodiment may be a long glass fiber or a short glass fiber. A short glass fiber is sometimes called glass wool for its wool-like texture. The glass fiber has an average fiber diameter of, for example, 0.1 to 50 $\mu$m.

A glass fiber manufacturing method of the present embodiment includes: melting the above-described glass composition; and spinning the molten glass composition into a glass fiber. In one example, a long glass fiber is manufactured by letting a glass melt having a controlled viscosity flow out through a nozzle and winding the resulting fiber with a winding machine. The thus-obtained continuous fiber is cut to an appropriate length when used. A short glass fiber is manufactured by blowing a glass melt using high-pressure air, centrifugal force, etc.

[Glass filler]

A glass filler of the present embodiment is formed from the above glass composition. The form of the glass filler is not limited to a particular form. The glass filler may be, for example, at least one selected from the group consisting of a scaly glass particle, a chopped strand, a milled fiber, a glass powder, and a glass bead. It should be noted that these forms are not strictly distinguished from each other. The glass filler of the present embodiment may be a combination of two or more glass fillers having different forms from each other.

A glass filler manufacturing method of the present embodiment includes: melting the above-described glass composition; and forming the molten glass composition into a glass filler. Forms of the glass filler will be described below.

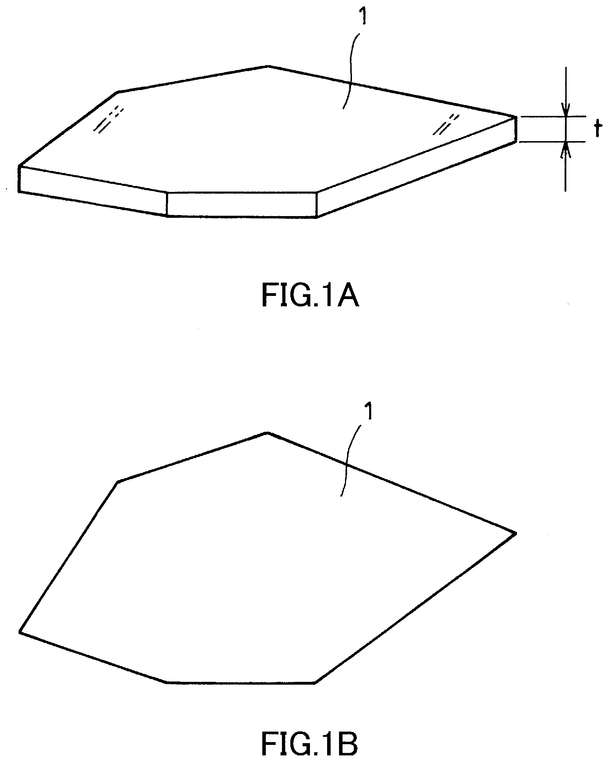

A preferred example of the glass filler of the present embodiment is a scaly glass particle. A scaly glass particle is also called a glass flake for its flake shape. FIG. 1A and FIG. 1B show an example of the scaly glass particle. A scaly glass particle 1 shown in FIG. 1A has an average thickness t of, for example, 0.1 to 15 $\mu$m. The scaly glass particle 1 has an average particle diameter of, for example, 0.2 to 15000 $\mu$m. The scaly glass particle 1 has an aspect ratio of, for example, 2 to 1000. The aspect ratio can be determined by dividing the average particle diameter by the average thickness t.

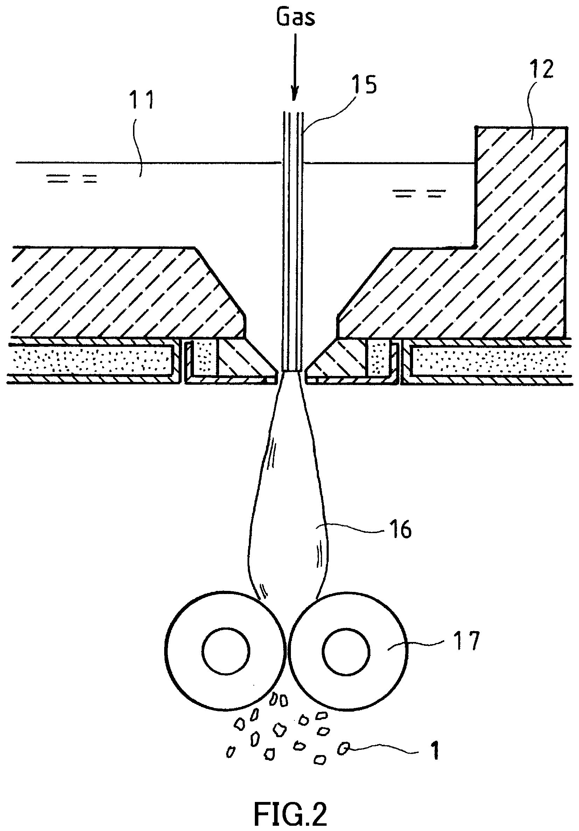

The scaly glass particle 1 can be manufactured, for example, using an apparatus shown in FIG. 2. In the apparatus shown in FIG. 2, a raw glass 11 molten in a refractory furnace 12 is inflated into a balloon by a gas delivered into a blow nozzle 15 to form a hollow glass film 16. The hollow glass film 16 is then crushed by a pressing roll 17 to give the scaly glass particle 1.

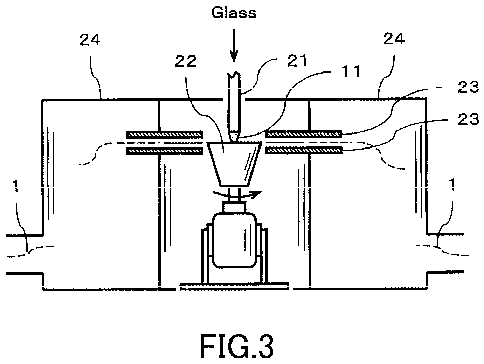

The scaly glass particle 1 can also be manufactured, for example, using an apparatus shown in FIG. 3. In the apparatus shown in FIG. 3, a molten raw glass 11 is poured into a rotary cup 22 through a nozzle 21, flows out from the upper edge of the rotary cup 22 in a radial manner by a centrifugal force generated by rotation of the cup 22. The raw glass 11 having flown out of the rotary cup 22 is drawn by an air stream and introduced into an annular cyclone collector 24 through annular plates 23 arranged horizontally parallel to each other. The glass cools and solidifies into a thin film while passing between the annular plates 23, and the thin film is crushed into fines pieces to give the scaly glass particle 1.

Another preferred example of the glass filler of the present embodiment is a chopped strand. The chopped strand has a shape obtained by cutting the glass fiber into short pieces. The chopped strand has a fiber diameter of, for example, 1 to 50 $\mu$m and has an aspect ratio of, for example, 2 to 10000. The aspect ratio of the chopped strand can be determined by dividing the fiber length by the fiber diameter.

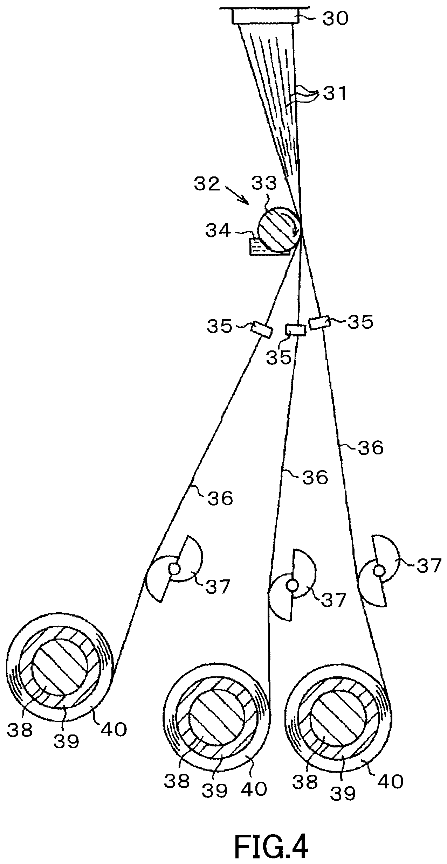

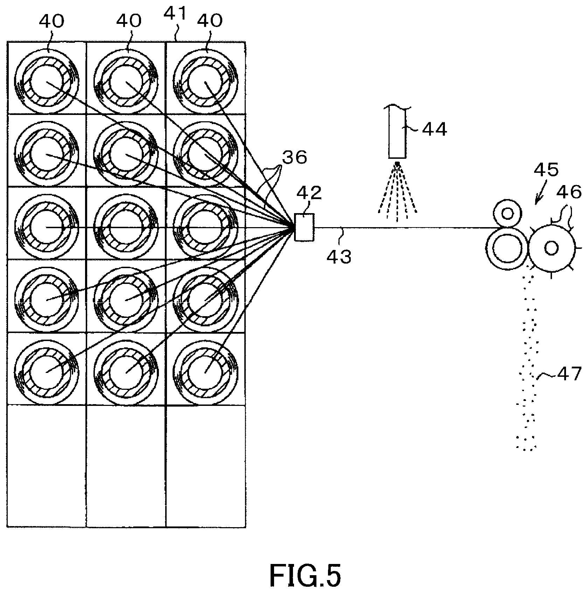

The chopped strand can be manufactured, for example, using apparatuses shown in FIGS. 4 and 5. First, as shown in FIG. 4, a raw glass having a predetermined composition and molten in a refractory furnace is drawn through a bushing 30 having a large number of (for example, 2400) nozzles in the bottom to form a large number of glass filaments 31. The glass filaments 31 are sprayed with cooling water, and then a binder (sizing agent) 34 is applied to the glass filaments 31 by an application roller 33 of a binder applicator 32. The large number of glass filaments 31 having the binder 34 thereon are bundled, through reinforcing pads 35, into strands 36 each composed of, for example, about 800 glass filaments 31. While being traversed by a traverse finger 37, each strand 36 is wound on a cylindrical tube 39 mounted on a collet 38. Then, the cylindrical tube 39 with the wound strand 36 is detached from the collet 38 to obtain a cake (wound strand body) 40.

Next, as shown in FIG. 5, the cakes 40 are placed in a creel 41, and the strands 36 are drawn out from the cakes 40 and bundled into a strand bundle 43 through a bundle guide 42. This strand bundle 43 is sprayed with water or a treating liquid using a spray device 44. Then, the strand bundle 43 is cut by a rotating blade 46 of a cutting apparatus 45, and thus chopped strands 47 are obtained.

Another preferred example of the glass filler of the present embodiment is a milled fiber. The milled fiber has a shape obtained by cutting the glass fiber into powder. The milled fiber has a fiber diameter of, for example, 1 to 50 $\mu$m and has an aspect ratio of, for example, 2 to 500. The aspect ratio of the milled fiber can be obtained by dividing the fiber length by the fiber diameter. The milled fiber can be obtained by a known method.

Another preferred example of the glass filler of the present embodiment is a glass powder. The glass powder is a powdery glass, and is manufactured by crushing the glass. The glass powder has an average particle diameter of, for example, 1 to 500 $\mu$m. The particle diameter of the glass powder is defined as the diameter of a sphere having the same volume as that of a particle of the glass powder. The glass powder can be obtained by a known method.

Another preferred example of the glass filler of the present embodiment is a glass bead. The glass bead has a spherical shape or an approximately spherical shape. The glass bead has an average particle diameter of, for example, 1 to 500 $\mu$m. The particle diameter of the glass bead is defined as the diameter of a sphere having the same volume as that of a particle of the glass bead. The glass bead can be obtained by a known method.

[Applications of glass fiber and glass filler]

The glass fiber and the glass filler of the present embodiment can be used for reinforcement of various products. For example, the glass fiber and the glass filler may be used for reinforcement of a concrete product, a rubber product, or a plastic product.

<Reinforcement of concrete products>

As described above, the glass fiber and the glass filler may be used for reinforcement of concrete products. In another aspect, the present invention provides a concrete product including at least one selected from the group consisting of the glass fiber and the glass filler of the present embodiment. In a preferred embodiment, the concrete product includes a cement composition and the glass fiber or the glass filler embedded in the cement composition. In another preferred embodiment, the concrete product includes a main portion and a coating member coating a surface of the main portion, the coating member including the glass fiber or the glass filler. The coating member may further include, for example, a material such as a resin or a cement.

The glass filler (especially a chopped strand) may be used for reinforcement of concrete products. The glass fiber and the glass filler used for reinforcement of concrete products may be processed as appropriate according to, for example, the kind of concrete product. Specifically, a fiber sheet, a rod, and the like including the glass fiber or the glass filler can be used for reinforcement of the concrete product.

(Chopped strand)

The chopped strand is mixed, for example, with a cement composition when used. Note that the chopped strand can be classified as a "bundled chopped strand" formed from a strand bundle or a "non-bundled chopped strand" formed from one strand. In one example, a mixture of the non-bundled chopped strand and a cement composition can form a coating member coating a surface of a main portion of a concrete product by spraying the mixture on the surface of the main portion. This coating member can reduce falling of the concrete material off the surface of the main portion. On the other hand, a mixture of the bundled chopped strand and a cement composition is suitable for reinforcement of a whole concrete product. The bundled chopped strand in this mixture plays the same role as straw included in a mud wall or mortar.

The chopped strand has a large specific surface area, and is in contact with cement in a large area. Therefore, the chopped strand used for reinforcement of concrete products particularly preferably has an excellent alkali resistance. This chopped strand also needs to have an elastic modulus that is high enough for practical use.

(Fiber sheet)

The fiber sheet may be a woven fabric or a non-woven fabric. Examples of the woven fabric include cloths including a roving or a yarn as a warp and/or a weft. Examples of the non-woven fabric include chopped strand mats formed of the chopped strand. The non-woven fabric may be formed of a short glass fiber.

The fiber sheet is impregnated, for example, with cement mortar or a resin such as an epoxy resin when used. The fiber sheet may be used with its surface coated by a layer (resin layer) formed of a resin. A fiber sheet impregnated with cement mortar or a resin and a fiber sheet having a surface coated by a resin layer may be herein called "protective sheets". A known method such as a hand lay-up method, a sheet molding compound (SMC) method, or a bulk molding compound (BMC) method can be used to manufacture a protective sheet.

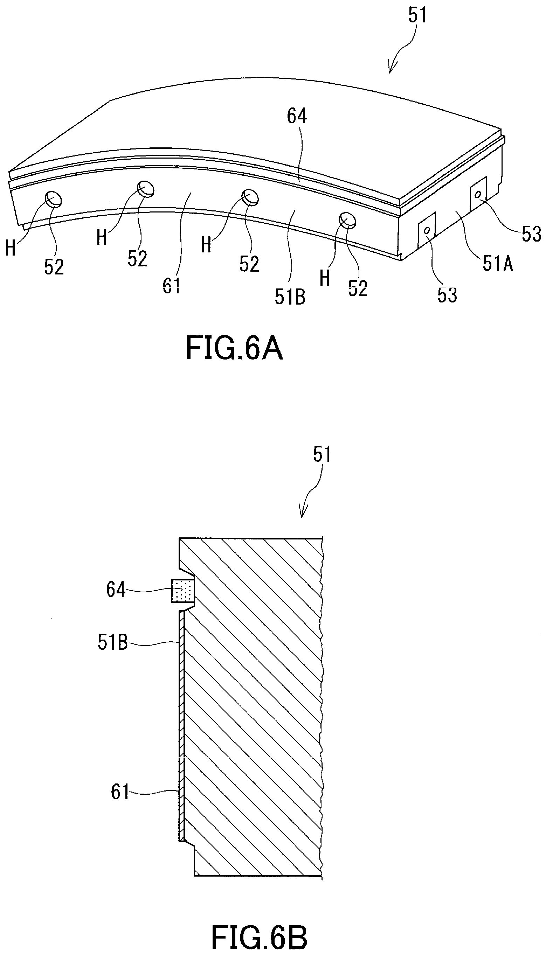

FIGS. 6A and 6B show an example of a concrete product including a protective sheet as described above. Specifically, FIGS. 6A and 6B show, as a concrete product, a segment 51 to be used for lining of tunnels by the shield method. The segment 51 is in the shape of an arc-shaped plate. A plurality of the segments 51 can form a tubular lining by being joined to each other in a borehole excavated by a shield machine. Specifically, a ring can be formed by joining the plurality of segments 51 to each other in a circumferential direction. The lining can be formed by joining the plurality of segments 51 to each other in an axial direction of the ring.

A circumferential joining end face 51A of the segment 51 is provided with a joint plate 53. A plurality of the segments 51 can be joined in the circumferential direction by fastening the joint plates 53 together and fixing the plurality of segments 51 to each other. One joining end face 51B of the segment 51 in the axial direction of the above ring is provided with a joining stick (not illustrated) protruding from the joining end face 51B. The other joining end face 51B is provided with a joining part 52 that is engageable with the joining stick. The joining part 52 has an insert hole H through which the joining stick is to be inserted.

FIG. 6B is an enlarged cross-sectional view of the segment 51 around the joining end face 51B. As shown in FIG. 6B, the segment 51 further includes a protective sheet 61 disposed on the joining end face 51B. In other words, in the segment 51, a surface of the protective sheet 61 forms the joining end face 51B. The protective sheet 61 functions as a coating member coating a surface of a main portion of the segment 51. When a plurality of the segments 51 are joined to each other, these joining end faces 51B, namely, the protective sheets 61, are in contact with each other.

As shown in FIGS. 6A and 6B, the segment 51 may further include a sealing member 64 that seals, in the case where a plurality of the segments 51 are joined to each other, the segments 51.

In the shield method, while a shield machine is excavating ground with a cutter at its front end portion, the shield machine extends a rod of a jack with a spreader of the jack in contact with a lining composed of the segments 51. This gives the shield machine a reaction force from the lining through the jack, allowing the shield machine move forward by means of the reaction force. As the shield machine includes a plurality of jacks, a plurality of spreaders are in contact with the lining. Therefore, when a pressing force exerted on the lining by the plurality of spreaders acts toward the external side of the lining, a stress may occur between two of the segments 51, the two being adjacent to each other in the lining. The protective sheet 61 is capable of reducing occurrence of cracking near the joining end face 51B by cushioning this stress.

(Rod)

The rod is formed, for example, of a bundle of the glass fibers. In one example, the rod is produced by weaving the glass fibers into a braid. In the rod, the bundle of the glass fibers may be bound with cement or a resin such as an epoxy resin. The rod can be used, for example, as a replacement for a reinforcing iron bar.

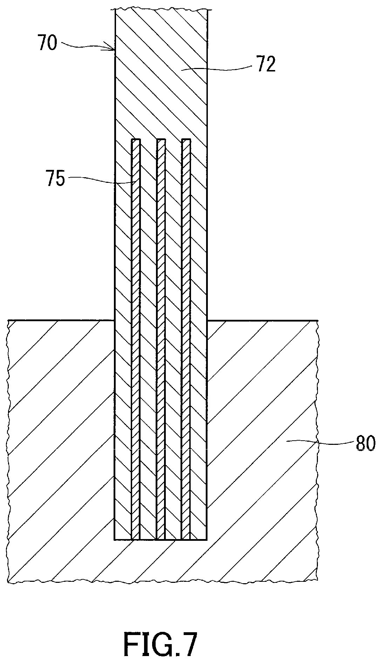

FIG. 7 shows an example of a concrete product including the above rod. Specifically, FIG. 7 shows a utility pole 70 as a concrete product. The utility pole 70 is partly embedded in ground 80, and stands upright. The utility pole 70 includes: a cement composition 72 including, for example, mortar and charged inside the utility pole 70; and a plurality of rods 75 embedded in the cement composition 72. The rods 75 are arranged parallel to each other along the direction of the utility pole 70 from the bottom of the utility pole 70. In the rod 75 used for reinforcement of the utility pole 70, the glass fiber particularly preferably has an excellent elastic modulus. This glass fiber also needs to have an alkali resistance that is high enough for practical use.

The utility pole 70 shown in FIG. 7 can be produced, for example, by inserting the rods 75 into a utility pole having a cavity inside through, for example, an opening and then charging the inside of the utility pole with the cement composition 72. The detail of this production method is described, for example, in JP 2006-002543 A. Incidentally, an aramid rod formed of aramid fibers is used in JP 2006-002543 A. The rod 75 including the glass fiber of the present embodiment tends to have an alkali resistance higher than that of an aramid rod.

(Others)

Examples of the concrete product reinforced with the glass fiber or the glass filler are not limited to those described above. The glass fiber and the glass filler can be used as aggregates, reinforcing materials, and the like of various concrete products. Because the glass fiber and the glass filler are also likely to have favorable mechanical properties and favorable thermal stability, the glass fiber and the glass filler can also be included in concrete products required to have thermal resistance (for example, concrete products used in power plants, melting furnaces, coke ovens, and the like) and construction materials required to have fire resistance (for example, fire-resistant constructions and fire-resistant coating materials of buildings).

Furthermore, the glass fiber and the glass filler can also be used after processed into other forms (such as a strand, a roving, a yarn, and a cord) than the above chopped strand, fiber sheet, and rod. Incidentally, a yarn is obtained by twisting one strand or two or more strands.

<Reinforcement of rubber products>

As described above, the glass fiber and the glass filler may be used for reinforcement of rubber products. In another aspect, the present invention provides a rubber product including at least one selected from the group consisting of the glass fiber and the glass filler of the present embodiment. In one example, the rubber product includes a rubber composition (matrix rubber) and the glass fiber or the glass filler embedded in the rubber composition.

The glass fiber and the glass filler used for reinforcement of rubber products may be processed as appropriate according to, for example, the kind of rubber product. Specifically, for example, a cord including the glass fiber can be used for reinforcement of the rubber product.

(Cord)

The cord (rubber-reinforcing cord) includes a strand of the above glass fibers (rubber-reinforcing fibers). The number of glass fibers included in the strand is, for example, but not particularly limited to, 100 to 2000, and is typically 200 to 600. The strand can be formed by, in spinning into glass fibers, bundling a given number of spun glass fibers using a sizing agent, such as an elastomer-based sizing agent, commonly used for formation of a strand. The thus-formed strand may be wound around, for example, a collet, and may be subjected to a given treatment such as drying.

It is preferable that in the cord, a plurality of the strands be bundled into a strand assembly. However, the number of strands forming the cord may be one. The strand or the strand assembly preferably includes 200 to 36000 glass fibers, and more preferably includes 200 to 7800 glass fibers. Additionally, the fineness based on corrected mass of the strand or the strand assembly is preferably 10 tex to 8350 tex, and more preferably 68 tex to 1430 tex.

In the cord, the strand may be coated by a first coating layer formed of a treating liquid A containing a latex and at least one selected from a resorcinol-formaldehyde condensate and a vulcanizing agent. The adherence between the cord and a matrix rubber in which the cord is embedded can be improved by coating the strand by the first coating layer. The first coating layer may coat one strand or a strand assembly formed of two or more strands.

The type of the latex is, for example, but not particularly limited to, at least one selected from a vinylpyridine-styrene-butadiene terpolymer (VP) latex, a chlorosulfonated polystyrene (CSM) latex, an acrylonitrile-butadiene copolymer (NBR) latex, and a nitrile-containing highly saturated polymer latex. The thermal resistance and the water resistance of the reinforcing cord can be improved by using any of these materials. Examples of the nitrile-containing highly saturated polymer include a material formed of a hydrogenated copolymer or terpolymer including an acrylonitrile as a structural unit (such as a material formed of hydrogenated NBR (H-NBR)) and a material including a saturated hydrocarbon and an acrylonitrile as structural units (such as a butadiene-ethylene-acrylonitrile terpolymer).

The resorcinol-formaldehyde condensate (RF) is not limited to a particular one, and a novolac-type, a resol-type, a mixed type of these, or the like may be used as the resorcinol-formaldehyde condensate (RF). A molar ratio between resorcinol (R) to formaldehyde (F) in the RF is preferably R:F = 1:1 to 3. Commercially-available RFs are generally liquids containing solids, and those in which the solids content is in the range of about 5 weight% to 10 weight% can be suitably used.

The vulcanizing agent is not limited to a particular one, and is, for example, at least one selected from a maleimide compound and an organic diisocyanate compound. When the treating liquid A contains the vulcanizing agent, the amount of the vulcanizing agent in the treating liquid A may be 5 to 100 parts by weight and is preferably 20 to 75 parts by weight with respect to 100 parts by weight of the solids in the latex. In these cases, a better balance between the flexibility of the cord and the adherence to the matrix rubber can be achieved.

The organic diisocyanate compound is not limited to a particular one, and, for example, hexamethylene diisocyanate, isophorone diisocyanate, methylene bis(4-cyclohexylisocyanate), toluene diisocyanate, xylene diisocyanate, naphthalene diisocyanate, or methylene bis(phenylisocyanate) may be used as the organic diisocyanate compound.

The treating liquid A may contain one of these organic diisocyanate compounds or two or more of these organic diisocyanate compounds. In the case where the organic diisocyanate compound is a substance, such as toluene diisocyanate or methylene bis(phenylisocyanate), having isomers regarding its substituent, the organic diisocyanate compound may be a mixture of the isomers. Alternatively, the organic diisocyanate compound may have an isocyanate group protected by a phenol or a lactam when used.

The maleimide compound is not limited to a particular one, and, for example, bismaleimide, phenylmaleimide, or diphenylmethane-4,4'-bismaleimide may be used as the maleimide compound.

The solids content in the treating liquid A is preferably 10 weight% to 40 weight%, and more preferably 25 weight% to 35 weight%. If the solids content is too low, formation of the first coating layer is insufficient. If the solids content is too high, it is difficult to control the amount of the treating liquid A applied to the strand and thus the first coating layer is likely to have a non-uniform thickness.

The treating liquid A may contain a base, such as ammonia, for adjustment of its pH, if necessary. Other than that, the treating liquid A may contain a stabilizer, an antioxidant, or the like. The treating liquid A may contain a filler such as carbon black, and, in this case, the cord can have a much better adherence to the matrix rubber.

A method commonly used for producing cords may be applied to formation of the first coating on the strand. For example, the strand (including the assembly) may be continuously immersed in a coating bath containing the treating liquid A, an excess of the treating liquid may be removed after the strand is drawn up from the coating bath, and the strand may be dried if necessary. The strand with the first coating may be directly used as a cord, or may be subjected to processing such as twisting or formation of a second coating layer as described later, if necessary.

The first coating layer may be formed in an amount corresponding to about 10 weight% to 30 weight% of the weight of the strand.

The cord may have a structure in which a bundle of two or more threads each formed by giving primary twists to the strand coated with the first coating layer is further given final twists. In this case, the cord can have a further improved strength and a much better bending fatigue resistance. The number of primary twists may be about 0.5 to 4 twists, preferably about 1.2 to 3 twists per 2.54 cm (1 inch) in the longitudinal direction. After about 2 to 20 threads, preferably about 6 to 15 threads, formed by the primary twisting are bundled, 0.5 to 4 final twists, preferably about 1 to 2.8 final twists, may be given to the bundle per 2.54 cm in the longitudinal direction.

The cord may be coated by a second coating layer including a rubber. In this case, the cord can have a much better adherence to the matrix rubber.

The type of the rubber is not limited to a particular one, and may be selected as appropriate according to, for example, the type of the matrix rubber. For example, when the matrix rubber is a nitrile-containing highly saturated polymer, the second coating layer preferably includes CSM as the above rubber because, in that case, a higher adherence is achieved. Alternatively, for example, when the matrix rubber is a rubber mixture including zinc polymethacrylate (ZDMA) dispersed in a nitrile-containing highly saturated polymer, the second coating layer preferably includes, as the above rubber, a nitrile-containing highly saturated copolymer or a rubber mixture having the same composition as that of the matrix rubber because, in that case, a higher adherence is achieved.

The second coating layer may be formed, for example, by impregnating the strand (including the assembly), the strand (including the assembly) coated by the first coating layer, or the thread formed by twisting the strand with a treating liquid B containing the rubber or a rubber precursor dissolved therein and then drying the strand or thread. Since the CSM and the nitrile-containing highly saturated polymer are soluble in aromatic hydrocarbons such as benzene, toluene, and xylene, halogenated hydrocarbons such as trichloroethylene, ketones such as methyl ethyl ketone, and esters such as ethyl acetate, the treating liquid B may contain any of these organic substances as its solvent.

The treating liquid B may contain a vulcanizing agent. Other than the above maleimide compound and the above organic diisocyanate compound, examples of the vulcanizing agent may include sulfur, organic peroxides such as dicumyl peroxide and 1,3-bis(t-butylperoxy-m-isopropyl)benzene, and aromatic nitroso compounds such as p-dinitronaphthalene and p-dinitrosobenzene. The treating liquid B may contain an inorganic filler, an antioxidant, a vulcanization assistant, or a plasticizer, if necessary.

The content of the substances (such as the rubber and the vulcanizing agent) other than the solvent in the treating liquid B may be determined as appropriate according to the types of the substances. The second coating layer can be easily formed when the content of the substances in the treating liquid B is about 3 weight% to 25 weight%, preferably about 5 weight% to 15 weight%. The content of the rubber or the rubber precursor in the substances other than the solvent is preferably about 20 weight% to 60 weight%. When the treating liquid B contains the vulcanizing agent, the vulcanizing agent content in the substances other than the solvent is preferably about 0.5 weight% to 30 weight%.

To form the second coating layer, for example, the treating liquid B may be applied to a surface of the strand (including the assembly) or the twisted thread such that the amount of the applied treating liquid B, as calculated in terms of the amount of the substances other than the solvent, is about 1 weight% to 15 weight%, preferably about 2 weight% to 6 weight% of the weight of the strand.

Examples of a rubber product reinforced with the above cord include a rubber belt, a rubber tire, and a rubber hose. One example of the rubber belt is a transmission belt. Examples of the transmission belt include a synchronous transmission belt and a friction transmission belt. One example of the synchronous transmission belt is a toothed belt typified by an automotive timing belt. Examples of the friction transmission belt include a flat belt, a round belt, a V belt, and a V-ribbed belt. The rubber tire is typically an automotive tire or a bicycle tire. In the cord used for reinforcement of rubber products, the glass fiber particularly preferably has an excellent elastic modulus.

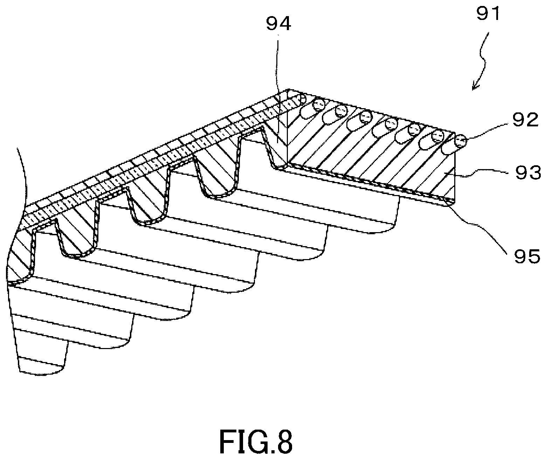

FIG. 8 shows one example of a structure of a rubber belt including a cord. A rubber belt 91 has the shape of what is called a toothed belt, and includes a matrix rubber 93 and a plurality of cords 92 embedded in the matrix rubber 93. The cords 92 are arranged parallel to each other along the longitudinal direction of the rubber belt 91, i.e., the direction orthogonal to the belt width direction in which a projecting portion 94 being a "tooth" extends. A facing fabric 95 is adhered onto a surface of the rubber belt 91 for the purpose of, for example, reducing abrasion, the surface having the projecting portion 94 thereon.

(Others)

The glass fiber and the glass filler can also be used after processed into forms other than the above cord. Examples of the other forms include the forms described above for concrete products.

<Reinforcement of plastic products>

As described above, the glass fiber and the glass filler may be used for reinforcement of plastic products (resin products). In another aspect, the present invention provides a plastic product including at least one selected from the group consisting of the glass fiber and the glass filler of the present embodiment. In a preferred embodiment, the plastic product includes a resin composition (matrix resin) and the glass fiber or the glass filler embedded in the resin composition. In another preferred embodiment, the plastic product includes a main portion and a coating member coating a surface of the main portion, and the coating member includes the glass fiber or the glass filler. The coating member may further include, for example, a material such as a resin. Plastic products reinforced with a glass fiber are sometimes referred to as "fiber reinforced plastics (FRPs)".

The matrix resin may include a thermosetting resin or a thermoplastic resin. The thermosetting resin is not limited to a particular one. Examples of the thermosetting resin include epoxy resins, modified epoxy resins such as vinyl ester resins, phenolic resins, unsaturated polyester resins, polyimide resins, and bismaleimide resins. The thermoplastic resin is not limited to a particular one. Examples of the thermoplastic resin include polyolefin resins, polyamide resins, polycarbonate resins, polyphenylene sulfide resin, and polyether ether ketone resin. The resin product including the thermoplastic resin can be easily produced by injection molding, stampable molding, or the like.

The glass filler (especially a chopped strand) may be used for reinforcement of plastic products. The glass fiber and the glass filler used for reinforcement of plastic products may be processed as appropriate according to, for example, the kind of plastic product. Specifically, for example, a fiber sheet including the glass fiber or the glass filler can be used for reinforcement of the plastic product. The glass fiber or the glass filler can also be used after processed into other forms than the chopped strand and the fiber sheet. Examples of the other forms include the forms described above for the concrete product.

The plastic product reinforced with the glass fiber or the glass filler of the present embodiment can be used in applications such as sporting goods, vehicles such as automobiles and the likes, vessels, construction materials, aircraft, septic tanks, bathtubs, blades for wind power generation, square timbers, poles, tanks, pipes, sewage pipes (drainage pipes), fuel tanks, and household electric appliances.

Examples of the plastic product used in sporting goods include fishing lines, fishing rods, golf club shafts, skies, canoes, and rackets and strings for tennis and badminton. Examples of the plastic product used in vehicles include vehicle bodies, lamp housings, front end panels, bumpers, seat housings, and driveshafts. Examples of the plastic products used in vessels include bodies of vessels, masts, and decks. Examples of the plastic product used in aircraft include primary structural members, secondary structural members, interior materials, seats, and accessories. Examples of the plastic product used in household electric appliances include boards, panels, switchgears, insulating devices, and bodies of household electric appliances.

The glass fiber and the glass filler included in plastic products, such as drainage pipes, used in natural environment can have contact with an acid liquid such as acid rain. Therefore, the glass fiber and the glass filler for such applications particularly preferably have excellent acid resistance. The glass fiber and the glass filler also need to have an elastic modulus that is high enough for practical use.

The glass fiber and the glass filler of the present embodiment can also be included in high-temperature thermal insulating materials included in mufflers and engine parts of vehicles, furnaces, and the like. The glass fiber and the glass filler of the present embodiment can also be included in separators included in batteries such as lead storage batteries.

EXAMPLES

Hereinafter, the present invention will be described in more detail by Examples and Comparative Examples.

[Examples 1 to 31 and Comparative Examples 1 to 11]

Raw materials, such as silicon dioxide, of common glass compositions were weighed according to compositions shown in Tables 2 to 6 (the unit of the content of each component is mass%), and were mixed to homogeneity to prepare raw material mixture batches. Specifically, for Examples 1 to 31 and Comparative Examples 1 to 8, coal ash, silicon dioxide, aluminum oxide, diboron trioxide, magnesium oxide, calcium carbonate, strontium carbonate, zinc oxide, lithium carbonate, sodium carbonate, potassium carbonate, titanium dioxide, zirconium oxide, and diiron trioxide were used. Table 1 shows the composition of the coal ash used.

[Table 1]

| | | Unit | Coal ash |
|---|---|---|---|
| Components | $SiO_2$ | [Mass%] | 65.6 |
| | $Al_2O_3$ | | 21.7 |
| | MgO | | 0.9 |
| | CaO | | 1.7 |
| | $Na_2O$ | | 0.6 |
| | $K_2O$ | | 1.1 |
| | $TiO_2$ | | 1.0 |
| | $T\text{-}Fe_2O_3$ | | 4.0 |
| | Others | | 3.4 |

Next, each of the prepared raw material mixture batches was molten at 1500 to 1600°C using an electric furnace, and was kept molten for about four hours so that the composition would be uniform. After that, a portion of the obtained molten glass composition (glass melt) was poured onto an iron plate, and was slowly cooled to room temperature in the electric furnace. A (plate-shaped) glass composition specimen to be used for evaluation was thus obtained in bulk.

The Young's modulus E, the working temperature, the mass reduction rate $\Delta W_1$ under an acidic solution condition, and the mass reduction rate $\Delta W_2$ under an alkaline solution condition were measured for the thus-produced glass composition specimen (hereinafter abbreviated as "specimen"). The measurement methods are as follows.

<Measurement of Young's modulus>

Plate-shaped samples each having dimensions of $25 \times 25 \times 5$ mm were fabricated by cutting the specimens and mirror-polishing every surface thereof. The density $\rho$ of each sample was measured by Archimedes' principle. The Young's modulus of each sample was measured according to the ultrasonic pulse method in JIS R 1602-1995. Specifically, each sample used in the above density measurement was used to measure, for longitudinal and transverse waves, the sound speed at which an ultrasonic pulse propagates through the sample. The sound speeds and the above density were substituted in the following formula to calculate the Young's modulus. The propagation speeds were evaluated using an ultrasonic thickness gauge MODEL 25DL PLUS manufactured by Olympus Corporation by dividing the time required by a 20 kHz ultrasonic pulse to propagate in the thickness direction of the sample, be reflected, and then come back by the propagation distance (twice the thickness of the sample).

$$E = 3\rho \cdot v_t^2 \cdot (v_l^2 - 4/3 \cdot v_t^2)/(v_l^2 - v_t^2)$$

E: Young's modulus (GPa)
$\rho$: Density (kg/m$^3$)
$v_l$: Longitudinal wave velocity (m/s)
$v_t$: Transverse wave velocity (m/s)

<Measurement of glass transition temperature>

Each glass composition was measured for its average coefficient of linear expansion using a commercially-available dilatometer (thermomechanical analyzer TMA8510 manufactured by Rigaku Corporation), and the glass transition temperature of the glass composition was determined from a thermal expansion curve obtained with the TMA apparatus.

<Measurement of working temperature>

For each obtained glass composition, the relationship between viscosity and temperature was examined by a common platinum ball-drawing method, and the working temperature of the obtained glass composition was determined from the examination result. The platinum ball-drawing method is a method for measuring the viscosity of molten glass by dipping a platinum ball in the molten glass, drawing the platinum ball upward at a uniform velocity, determining the relationship between the load (friction) during the upward drawing of the platinum ball and the gravity, buoyancy, etc. acting on the platinum ball, and applying the determined relationship to the Stokes' law which states the relationship between the viscosity of a fluid and the fall velocity at which a small particle settles down in the fluid.

<Measurement of mass reduction rates $\Delta W_1$ and $\Delta W_2$>

The mass reduction rates $\Delta W_1$ and $\Delta W_2$ were measured according to a standard "Measuring Method for Chemical Durability of Optical Glass (Powder Method)" (JOGIS 06) specified by a general incorporated association Japan Optical Glass Manufacturers' Association.

(Measurement of mass reduction rate $\Delta W_1$ under acidic solution condition)

The measurement was carried out by the following steps.

1. The glass composition specimen is crushed.
2. From the crushed specimen, a powder specimen passing through a 600 $\mu$m test sieve and retained on a 425 $\mu$m test sieve is separated out. Incidentally, the test sieves are in accordance with JIS Z 8801.
3. An amount of 5 g of the powder specimen is weighed out.
4. The weighed-out powder specimen is immersed in 80 mL of 21.2 mass% aqueous sulfuric acid solution at 99°C for one hour.
5. After the immersion, the supernatant is removed by decantation. The residual specimen is dried to be solidified, and is measured for its mass.
6. A ratio of the difference between the mass of the specimen before the immersion in the aqueous sulfuric acid solution and the mass of the residual specimen to the mass of the specimen before the immersion in the aqueous sulfuric acid solution is calculated as the mass reduction rate $\Delta W_1$.

As described above, the mass reduction rate $\Delta W_1$ is the measure of the acid resistance.

(Measurement of mass reduction rate $\Delta W_2$ under alkaline solution condition)

The measurement was carried out by the following steps.

1. The glass composition specimen is crushed.
2. From the crushed specimen, a powder specimen passing through a 600 $\mu$m test sieve and retained on a 425 $\mu$m test sieve is separated out. Incidentally, the test sieves are in accordance with JIS Z 8801.
3. An amount of 5 g of the powder specimen is weighed out.
4. The weighed-out powder specimen is immersed in 80 mL of 10 mass% aqueous sodium hydroxide solution at 99°C for one hour.
5. After the immersion, the supernatant is removed by decantation. The residual specimen is dried to be solidified, and is measured for its mass.
6. A ratio of the difference between the mass of the specimen before the immersion in the aqueous sodium hydroxide solution and the mass of the residual specimen to the mass of the specimen before the immersion in the aqueous sodium hydroxide solution is calculated as the mass reduction rate $\Delta W_2$.

As described above, the mass reduction rate $\Delta W_2$ is the measure of the alkaline resistance.

Tables 2 to 6 show the Young's modulus, the glass transition temperature, the working temperature, the mass reduction rate $\Delta W_1$ under the acidic solution condition, and the mass reduction rate $\Delta W_2$ under the alkaline solution condition of each glass composition.

[Table 2]

| | | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Raw material blending ratio | Coal ash | [Mass%] | | 26.3 | 7.4 | 8.9 | 11.6 | 17.3 | 26.2 | 32.2 | 26.4 | 28.7 | 28.5 |
| | Silicon dioxide | | 47.3 | 29.5 | 44.6 | 41.4 | 38.2 | 33.4 | 29.0 | 25.7 | 29.3 | 27.1 | 26.9 |
| | Diboron trioxide | | - | - | - | - | - | - | - | - | - | - | - |
| | Aluminum oxide | | 6.4 | - | 4.9 | 5.9 | 2.5 | - | - | - | - | - | - |
| | Magnesium oxide | | 0.5 | - | - | 2.0 | - | - | - | 0.7 | - | - | - |
| | Calcium carbonate | | 29.1 | 32.3 | 28.3 | 26.7 | 33.2 | 35.2 | 30.9 | 25.8 | 28.6 | 27.9 | 26.4 |
| | Strontium carbonate | | - | - | - | - | - | - | - | - | - | - | - |
| | Zinc oxide | | - | - | - | - | - | - | - | - | - | - | - |
| | Lithium carbonate | | - | - | - | - | - | - | - | - | - | - | - |
| | Sodium carbonate | | 0.6 | - | - | - | - | - | - | - | - | - | - |
| | Potassium carbonate | | 0.9 | - | - | - | - | - | - | - | - | - | - |
| | Titanium dioxide | | - | - | - | - | - | - | - | - | 1.7 | - | - |
| | Zirconium oxide | | - | - | - | - | - | - | - | - | - | - | - |
| | Diiron trioxide | | 15.1 | 11.9 | 14.9 | 15.1 | 14.5 | 14.1 | 13.8 | 15.6 | 13.9 | 16.4 | 18.2 |
| Components | $SiO_2$ | [Mass%] | 54.7 | 55.1 | 56.6 | 53.8 | 53.9 | 53.3 | 54.0 | 53.4 | 53.8 | 52.8 | 52.1 |
| | $B_2O_3$ | | - | - | - | - | - | - | - | - | - | - | - |
| | $Al_2O_3$ | | 7.4 | 6.7 | 7.4 | 8.9 | 6.0 | 4.5 | 6.7 | 8.0 | 6.6 | 7.2 | 7.1 |
| | $SiO_2+B_2O_3$ | | 54.7 | 55.1 | 56.6 | 53.8 | 53.9 | 53.3 | 54.0 | 53.4 | 53.8 | 52.8 | 52.1 |
| | $SiO_2+Al_2O_3$ | | 62.1 | 61.8 | 64.0 | 62.7 | 59.9 | 57.8 | 60.7 | 61.3 | 60.5 | 60.0 | 59.1 |
| | MgO | | 0.59 | 0.27 | 0.07 | 2.35 | 0.12 | 0.18 | 0.29 | 1.15 | 0.29 | 0.28 | 0.28 |
| | CaO | | 18.8 | 21.8 | 18.3 | 17.2 | 22.1 | 23.9 | 20.7 | 17.1 | 19.0 | 18.5 | 17.5 |
| | SrO | | - | - | - | - | - | - | - | - | - | - | - |
| | ZnO | | - | - | - | - | - | - | - | - | - | - | - |
| | $Li_2O$ | | - | - | - | - | - | - | - | - | - | - | - |
| | $Na_2O$ | | 0.45 | 0.18 | 0.05 | 0.06 | 0.08 | 0.12 | 0.18 | 0.22 | 0.18 | 0.19 | 0.19 |
| | $K_2O$ | | 0.69 | 0.33 | 0.09 | 0.11 | 0.14 | 0.22 | 0.32 | 0.39 | 0.32 | 0.35 | 0.34 |
| | $Na_2O+K_2O$ | | 1.14 | 0.51 | 0.14 | 0.17 | 0.22 | 0.34 | 0.50 | 0.61 | 0.50 | 0.54 | 0.53 |
| | $Li_2O+Na_2O+K_2O$ | | 1.14 | 0.51 | 0.14 | 0.17 | 0.22 | 0.34 | 0.50 | 0.61 | 0.50 | 0.54 | 0.53 |
| | $TiO_2$ | | - | 0.32 | 0.09 | 0.10 | 0.14 | 0.21 | 0.32 | 0.38 | 2.31 | 0.34 | 0.34 |
| | $ZrO_2$ | | - | - | - | - | - | - | - | - | - | - | - |
| | $T-Fe_2O_3$ | | 17.4 | 15.2 | 17.4 | 17.5 | 17.5 | 17.6 | 17.4 | 19.3 | 17.3 | 20.2 | 22.1 |

(continued)

| | | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Properties | $Al_2O_3/(SiO_2+Al_2O_3)$ | Mass ratio | 0.12 | 0.11 | 0.12 | 0.14 | 0.10 | 0.08 | 0.11 | 0.13 | 0.11 | 0.12 | 0.12 |
| | $MgO/(MgO+CaO)$ | Mass ratio | 0.030 | 0.012 | 0.004 | 0.120 | 0.005 | 0.007 | 0.014 | 0.063 | 0.015 | 0.015 | 0.016 |
| | Young's modulus | [GPa] | 90 | 91 | 89 | 93 | 92 | 93 | 92 | 92 | 93 | 92 | 92 |
| | Glass transition temperature | [°C] | 663 | 677 | 670 | 680 | 666 | 662 | 676 | 667 | 669 | 658 | 650 |
| | Working temperature | [°C] | 1138 | 1136 | 1168 | 1151 | 1103 | 1073 | 1120 | 1139 | 1119 | 1117 | 1107 |
| | Mass reduction rate $\Delta W_1$ | [Mass%] | 0.02 | 0.04 | 0.03 | 0.09 | 0.05 | 0.08 | 0.10 | 0.08 | 0.03 | 0.09 | 0.12 |
| | Mass reduction rate $\Delta W_2$ | [Mass%] | 0.18 | 0.04 | 0.16 | 0.18 | 0.03 | 0.07 | 0.12 | 0.17 | 0.07 | 0.09 | 0.11 |

[Table 3]

| | | Unit | Ex. 12 | Ex. 13 | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|---|---|
| Raw material blending ratio | Coal ash | [Mass%] | 7.4 | 19.6 | 32.2 | 8.0 | 34.7 | 23.9 | 27.2 | 26.0 | - | 29.4 | 25.3 |
| | Silicon dioxide | | 42.8 | 31.8 | 23.9 | 41.2 | 22.8 | 31.4 | 30.5 | 28.8 | 48.9 | 26.2 | 28.0 |
| | Diboron trioxide | | - | - | - | - | - | - | - | - | - | 1.8 | - |
| | Aluminum oxide | | 4.9 | 1.4 | - | 5.3 | - | - | - | - | 6.7 | | - |
| | Magnesium oxide | | - | 0.3 | 0.2 | - | - | 1.8 | 1.8 | - | 1.1 | 0.8 | - |
| | Calcium carbonate | | 34.1 | 32.9 | 34.0 | 29.7 | 27.3 | 28.6 | 28.2 | 28.3 | 34.0 | 28.0 | 22.7 |
| | Strontium carbonate | | - | - | - | - | - | - | - | - | - | - | 10.6 |
| | Zinc oxide | | - | - | - | - | - | - | - | - | - | - | - |
| | Lithium carbonate | | - | - | - | - | 1.8 | - | - | - | - | - | - |
| | Sodium carbonate | | - | - | - | 0.6 | - | - | - | - | - | - | - |
| | Potassium carbonate | | - | - | - | 0.7 | - | - | - | - | - | - | - |
| | Titanium dioxide | | - | - | - | - | - | - | - | - | - | - | - |
| | Zirconium oxide | | - | - | - | - | - | - | - | 3.0 | - | - | - |
| | Diiron trioxide | | 10.8 | 14.0 | 9.7 | 14.6 | 13.4 | 14.3 | 12.3 | 13.8 | 9.4 | 13.9 | 13.5 |
| Components | $SiO_2$ | [Mass%] | 56.2 | 52.5 | 53.6 | 53.8 | 53.1 | 54.3 | 55.7 | 53.0 | 57.6 | 52.5 | 51.9 |
| | $B_2O_3$ | | - | - | - | - | - | - | - | - | - | 2.0 | - |
| | $Al_2O_3$ | | 7.6 | 6.7 | 8.3 | 8.1 | 8.8 | 6.0 | 6.8 | 6.5 | 7.8 | 7.4 | 6.4 |
| | $SiO_2+B_2O_3$ | | 56.2 | 52.5 | 53.6 | 53.8 | 53.1 | 54.3 | 55.7 | 53.0 | 57.6 | 54.5 | 51.9 |
| | $SiO_2+Al_2O_3$ | | 63.9 | 59.2 | 61.9 | 61.9 | 61.9 | 60.3 | 62.5 | 59.5 | 65.4 | 59.9 | 58.3 |
| | $MgO$ | | 0.07 | 0.59 | 0.60 | 0.08 | 0.35 | 2.37 | 2.39 | 0.29 | 1.24 | 1.16 | 0.28 |
| | $CaO$ | | 22.7 | 22.1 | 23.3 | 19.5 | 18.5 | 19.0 | 18.7 | 18.8 | 22.4 | 18.6 | 15.2 |
| | $SrO$ | | - | - | - | - | - | - | - | - | - | - | 8.7 |
| | $ZnO$ | | - | - | - | - | - | - | - | - | - | - | - |
| | $Li_2O$ | | - | - | - | - | 0.86 | - | - | - | - | - | - |
| | $Na_2O$ | | 0.05 | 0.14 | 0.23 | 0.45 | 0.24 | 0.16 | 0.18 | 0.18 | - | 0.20 | 0.17 |
| | $K_2O$ | | 0.09 | 0.24 | 0.41 | 0.68 | 0.43 | 0.29 | 0.33 | 0.32 | - | 0.36 | 0.31 |
| | $Na_2O+K_2O$ | | 0.14 | 0.38 | 0.64 | 1.13 | 0.67 | 0.45 | 0.51 | 0.50 | - | 0.56 | 0.48 |
| | $Li_2O+Na_2O+K_2O$ | | 0.14 | 0.38 | 0.64 | 1.13 | 1.53 | 0.45 | 0.51 | 0.50 | - | 0.56 | 0.48 |
| | $TiO_2$ | | 0.09 | 0.24 | 0.40 | 0.10 | 0.42 | 0.28 | 0.32 | 0.31 | - | 0.35 | 0.30 |
| | $ZrO_2$ | | - | - | - | - | - | - | - | 3.51 | - | - | - |
| | $T-Fe_2O_3$ | | 13.2 | 17.5 | 13.1 | 17.3 | 17.2 | 17.6 | 15.4 | 17.0 | 11.0 | 17.3 | 16.7 |

(continued)

| Properties | | Unit | Ex. 12 | Ex. 13 | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|---|---|
| | $Al_2O_3/(SiO_2+Al_2O_3)$ | Mass ratio | 0.12 | 0.11 | 0.13 | 0.13 | 0.14 | 0.10 | 0.11 | 0.11 | 0.12 | 0.12 | 0.11 |
| | $MgO/(MgO+CaO)$ | | 0.003 | 0.026 | 0.025 | 0.004 | 0.019 | 0.111 | 0.113 | 0.015 | 0.053 | 0.059 | 0.018 |
| | Young's modulus | [GPa] | 90 | 94 | 93 | 90 | 94 | 93 | 92 | 94 | 91 | 91 | 89 |
| | Glass transition temperature | [°C] | 687 | 670 | 692 | 664 | 627 | 671 | 681 | 686 | 698 | 662 | 669 |
| | Working temperature | [°C] | 1154 | 1094 | 1131 | 1135 | 1106 | 1119 | 1152 | 1147 | 1173 | 1117 | 1123 |
| | Mass reduction rate $\Delta W_1$ | [Mass%] | 0.04 | 0.17 | 0.05 | 0.03 | 0.05 | 0.03 | 0.03 | 0.03 | 0.02 | 0.11 | 0.07 |
| | Mass reduction rate $\Delta W_2$ | [Mass%] | 0.05 | 0.13 | 0.13 | 0.16 | 0.15 | 0.15 | 0.14 | 0.09 | 0.06 | 0.09 | 0.10 |

[Table 4]

| | | Unit | Ex. 23 | Ex. 24 | Ex. 25 | Ex. 26 | Ex. 27 | Ex. 28 | Ex. 29 | Ex. 30 | Ex. 31 |
|---|---|---|---|---|---|---|---|---|---|---|---|
| Raw material blending ratio | Coal ash | [Mass%] | - | 26.3 | 29.7 | - | - | 29.1 | - | 29.8 | 30.8 |
| | Silicon dioxide | | 47.2 | 28.4 | 27.7 | 47.0 | 47.3 | 27.4 | 44.7 | 28.1 | 23.5 |
| | Diboron trioxide | | - | 0.9 | - | - | - | - | - | 0.4 | - |
| | Aluminum oxide | | 6.5 | - | - | 6.4 | 5.8 | - | 5.6 | - | - |
| | Magnesium oxide | | 1.1 | 0.5 | 0.3 | 0.3 | 0.8 | 0.3 | 0.3 | 0.5 | - |
| | Calcium carbonate | | 30.8 | 29.2 | 30.2 | 28.9 | 31.9 | 25.8 | 25.7 | 27.8 | 20.0 |
| | Strontium carbonate | | - | 3.7 | - | - | - | - | 7.2 | - | 10.6 |
| | Zinc oxide | | - | - | 2.1 | - | - | - | - | - | - |
| | Lithium carbonate | | 1.0 | - | - | - | - | - | - | - | - |
| | Sodium carbonate | | - | - | - | 1.3 | - | - | 0.5 | - | - |
| | Potassium carbonate | | - | - | - | - | 0.9 | - | 0.2 | - | - |
| | Titanium dioxide | | - | - | - | - | - | - | - | 0.7 | - |
| | Zirconium oxide | | - | - | - | - | - | 4.6 | 3.0 | 1.6 | 5.9 |
| | Diiron trioxide | | 13.4 | 11.0 | 10.0 | 16.1 | 13.3 | 12.8 | 12.8 | 11.1 | 9.3 |
| Components | $SiO_2$ | [Mass%] | 55.2 | 53.7 | 55.1 | 54.3 | 55.3 | 53.1 | 52.0 | 55.0 | 50.2 |
| | $B_2O_3$ | | - | 1.0 | - | - | - | - | - | 0.5 | - |
| | $Al_2O_3$ | | 7.6 | 6.7 | 7.5 | 7.4 | 6.8 | 7.2 | 6.5 | 7.5 | 7.7 |
| | $SiO_2+B_2O_3$ | | 55.2 | 54.7 | 55.1 | 54.3 | 55.3 | 53.1 | 52.0 | 55.5 | 50.2 |
| | $SiO_2+Al_2O_3$ | | 62.8 | 60.4 | 62.7 | 61.7 | 62.2 | 60.3 | 58.5 | 62.5 | 57.9 |
| | MgO | | 1.20 | 0.89 | 0.60 | 0.29 | 0.90 | 0.57 | 0.29 | 0.89 | 0.30 |
| | CaO | | 20.1 | 19.7 | 20.3 | 18.7 | 20.8 | 17.1 | 16.7 | 18.5 | 13.5 |
| | SrO | | - | 3.0 | - | - | - | - | 5.9 | - | 8.5 |
| | ZnO | | - | - | 2.4 | - | - | - | - | - | - |
| | $Li_2O$ | | 0.45 | - | - | - | - | - | - | - | - |
| | $Na_2O$ | | - | 0.18 | 0.20 | 0.90 | - | 0.20 | 0.35 | 0.20 | 0.21 |
| | $K_2O$ | | - | 0.33 | 0.37 | - | 0.70 | 0.35 | 0.13 | 0.36 | 0.37 |
| | $Na_2O+K_2O$ | | - | 0.51 | 0.57 | 0.90 | 0.70 | 0.55 | 0.48 | 0.56 | 0.58 |
| | $Li_2O+Na_2O+K_2O$ | | 0.45 | 0.51 | 0.57 | 0.90 | 0.70 | 0.55 | 0.48 | 0.56 | 0.58 |
| | $TiO_2$ | | - | 0.32 | 0.36 | - | - | 0.34 | - | 1.17 | 0.36 |
| | $ZrO_2$ | | - | - | - | - | - | 5.23 | 3.49 | 1.80 | 6.75 |
| | $T-Fe_2O_3$ | | 15.5 | 14.0 | 13.0 | 18.5 | 15.4 | 15.8 | 14.7 | 14.0 | 12.0 |

(continued)

| | | Unit | Ex. 23 | Ex. 24 | Ex. 25 | Ex. 26 | Ex. 27 | Ex. 28 | Ex. 29 | Ex. 30 | Ex. 31 |
|---|---|---|---|---|---|---|---|---|---|---|---|
| | $Al_2O_3/(SiO_2+Al_2O_3)$ | Mass ratio | 0.12 | 0.11 | 0.12 | 0.12 | 0.11 | 0.12 | 0.11 | 0.12 | 0.13 |
| | $MgO/(MgO+CaO)$ | Mass ratio | 0.056 | 0.043 | 0.029 | 0.015 | 0.041 | 0.032 | 0.017 | 0.046 | 0.022 |
| Properties | Young's modulus | [GPa] | 93 | 90 | 91 | 90 | 91 | 93 | 92 | 91 | 93 |
| | Glass transition temperature | [°C] | 657 | 677 | 677 | 654 | 677 | 701 | 689 | 690 | 724 |
| | Working temperature | [°C] | 1123 | 1129 | 1152 | 1124 | 1138 | 1182 | 1144 | 1169 | 1199 |
| | Mass reduction rate $\Delta W_1$ | [Mass%] | 0.09 | 0.11 | 0.06 | 0.08 | 0.08 | 0.04 | 0.15 | 0.04 | 0.10 |
| | Mass reduction rate $\Delta W_2$ | [Mass%] | 0.10 | 0.09 | 0.14 | 0.13 | 0.09 | 0.11 | 0.07 | 0.15 | 0.10 |

[Table 5]

| | | Unit | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Raw material blending ratio | Coal ash | [Mass%] | 43.1 | 5.9 | 28.1 | 15.1 | 36.0 | 6.0 | 25.8 | - |
| | Silicon dioxide | | 17.7 | 43.2 | 26.5 | 39.6 | 26.3 | 44.2 | 19.7 | 52.1 |
| | Diboron trioxide | | - | - | - | - | - | - | 10.3 | - |
| | Aluminum oxide | | - | - | - | - | - | - | - | 6.6 |
| | Magnesium oxide | | - | - | - | - | - | - | - | - |
| | Calcium carbonate | | 26.3 | 36.2 | 23.7 | 37.6 | 31.0 | 38.0 | 30.4 | 25.8 |
| | Strontium carbonate | | - | - | - | - | - | - | - | - |
| | Zinc oxide | | - | - | - | - | - | - | - | - |
| | Lithium carbonate | | - | - | - | - | - | - | - | - |
| | Sodium carbonate | | - | - | - | - | - | - | - | - |
| | Potassium carbonate | | - | - | - | - | - | - | - | - |
| | Titanium dioxide | | - | - | - | - | - | - | - | - |
| | Zirconium oxide | | - | - | - | - | - | - | - | - |
| | Diiron trioxide | | 12.9 | 14.8 | 21.8 | 7.7 | 6.8 | 11.9 | 13.7 | 15.5 |
| Components | $SiO_2$ | [Mass%] | 52.8 | 56.1 | 50.6 | 59.7 | 58.6 | 57.8 | 42.9 | 58.9 |
| | $B_2O_3$ | | - | - | - | - | - | - | 11.9 | - |
| | $Al_2O_3$ | | 10.8 | 1.5 | 6.9 | 4.0 | 9.2 | 1.6 | 6.6 | 7.4 |
| | $SiO_2+B_2O_3$ | | 52.8 | 56.1 | 50.6 | 59.7 | 58.6 | 57.8 | 54.8 | 58.9 |
| | $SiO_2+Al_2O_3$ | | 63.5 | 57.6 | 57.5 | 63.7 | 67.8 | 59.4 | 49.4 | 66.3 |
| | MgO | | 0.43 | 0.06 | 0.27 | 0.16 | 0.36 | 0.06 | 0.29 | - |
| | CaO | | 17.7 | 24.3 | 15.5 | 25.7 | 21.0 | 25.7 | 20.4 | 16.3 |
| | SrO | | - | - | - | - | - | - | - | - |
| | ZnO | | - | - | - | - | - | - | - | - |
| | $Li_2O$ | | - | - | - | - | - | - | - | - |
| | $Na_2O$ | | 0.29 | 0.04 | 0.19 | 0.11 | 0.25 | 0.04 | 0.18 | - |
| | $K_2O$ | | 0.52 | 0.07 | 0.34 | 0.19 | 0.45 | 0.08 | 0.32 | - |
| | $Na_2O+K_2O$ | | 0.81 | 0.11 | 0.53 | 0.30 | 0.70 | 0.12 | 0.50 | - |
| | $Li_2O+Na_2O+K_2O$ | | 0.81 | 0.11 | 0.53 | 0.30 | 0.70 | 0.12 | 0.50 | - |
| | $TiO_2$ | | 0.51 | 0.07 | 0.33 | 0.19 | 0.44 | 0.07 | 0.31 | - |
| | $ZrO_2$ | | - | - | - | - | - | - | - | - |

EP 4 570 767 A1

26

| | | Unit | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| | $T\text{-}Fe_2O_3$ | | 16.8 | 17.9 | 25.8 | 9.9 | 9.6 | 14.6 | 17.1 | 17.4 |
| | $Al_2O_3/(SiO_2+Al_2O_3)$ MgO/(MgO+CaO) | Mass ra-tio | 0.17 0.024 | 0.03 0.002 | 0.12 0.017 | 0.06 0.006 | 0.14 0.017 | 0.03 0.002 | 0.13 0.014 | 0.11 - |
| Properties | Young's modulus | [GPa] | 93 | - | 94 | - | 87 | - | - | 88 |
| | Glass transition temperature Working temperature | [°C] | 676 1173 | - - | 633 1085 | - - | 704 1221 | - - | - - | 669 1203 |
| | Mass reduction rate $\Delta W_1$ Mass reduction rate $\Delta W_2$ | [Mass%] | 0.16 0.22 | - - | 0.38 0.21 | - - | 0.05 0.20 | - - | - - | 0.02 0.13 |

EP 4 570 767 A1

[Table 6]

| | | | Unit | Comp. Ex. 9 | Comp. Ex. 10 | Comp. Ex. 11 |
|---|---|---|---|---|---|---|
| Components | | $SiO_2$ | [Mass%] | 67.05 | 54.84 | 62.50 |
| | | $B_2O_3$ | | 4.68 | 5.95 | - |
| | | $Al_2O_3$ | | 4.02 | 14.52 | 0.50 |
| | | $SiO_2+B_2O_3$ | | 71.73 | 60.79 | 62.50 |
| | | $SiO_2+Al_2O_3$ | | 71.07 | 69.36 | 63.00 |
| | | MgO | | 2.58 | 0.38 | - |
| | | CaO | | 6.53 | 22.80 | 5.70 |
| | | ZnO | | 3.61 | - | - |
| | | $Li_2O$ | | 0.59 | - | - |
| | | $Na_2O$ | | 10.17 | 0.49 | 14.20 |
| | | $K_2O$ | | 0.77 | 0.30 | 0.30 |
| | | $Na_2O+K_2O$ | | 10.94 | 0.79 | 14.50 |
| | | $Li_2O+Na_2O+K_2O$ | | 11.53 | 0.79 | 14.50 |
| | | $ZrO_2$ | | - | - | 16.80 |
| | | $T-Fe_2O_3$ | | - | 0.25 | - |
| | | $F_2$ | | - | 0.48 | - |
| | | $Al_2O_3/(SiO_2+Al_2O_3)$ | Mass ratio | 0.06 | 0.21 | 0.01 |
| | | $MgO/(MgO+CaO)$ | | 0.283 | 0.016 | - |
| Properties | | Young's modulus | [GPa] | 78 | 83 | 84 |
| | | Glass transition temperature | [°C] | 553 | 681 | 667 |
| | | Working temperature | | 1165 | 1205 | 1275 |
| | | Mass reduction rate $\Delta W_1$ | [Mass%] | 0.10 | - | 0.02 |
| | | Mass reduction rate $\Delta W_2$ | [Mass%] | - | 0.27 | 0.06 |

As can be seen from Tables 2 to 4, the glass compositions of Examples 1 to 31 have a Young's modulus in the range of 89 to 94 GPa, a mass reduction rate $\Delta W_1$ in the range of 0.02 to 0.17 mass% under the acidic solution condition, and a mass reduction rate $\Delta W_2$ in the range of 0.03 to 0.18 mass% under the alkaline solution condition. This means that the glass compositions of Examples have high elastic modulus and improved acid resistance and alkali resistance.

Meanwhile, $Al_2O_3/(SiO_2+Al_2O_3)$ in the glass composition of Comparative Example 1 is 0.17, which exceeds 0.15. The glass composition of Comparative Example 1, whose mass reduction rate $\Delta W_2$ under the alkaline solution condition is 0.22 mass%, is inferior in alkali resistance to the glass compositions of Examples 1 to 31.

$Al_2O_3/(SiO_2+Al_2O_3)$ in the glass composition of Comparative Example 2 is 0.03, which is below 0.05. In Comparative Example 2, the glass composition underwent phase separation, and a homogeneous glass material was unable to be obtained.

The $T-Fe_2O_3$ content in the glass composition of Comparative Example 3 is 25.8 mass%, which exceeds 25 mass%. The glass composition of Comparative Example 3, whose mass reduction rate $\Delta W_1$ under the acidic solution condition is 0.38 mass%, is inferior in acid resistance to the glass compositions of Examples 1 to 22. Furthermore, the glass composition of Comparative Example 3, whose mass reduction rate $\Delta W_2$ under the alkaline solution condition is 0.21 mass%, is inferior in alkali resistance to the glass compositions of Examples 1 to 31.

The $T-Fe_2O_3$ content in the glass composition of Comparative Example 4 is 9.9 mass%, which is less than 10 mass%. In Comparative Example 4, the glass composition underwent phase separation, and a homogeneous glass material was unable to be obtained.

The $T-Fe_2O_3$ content in the glass composition of Comparative Example 5 is 9.6 mass%, which is below 10 mass%. The glass composition of Comparative Example 5 has a Young's modulus of 87 GPa, i.e., a lower elasticity than those of the glass compositions of Examples 1 to 31.

$Al_2O_3/(SiO_2+Al_2O_3)$ in the glass composition of Comparative Example 6 is 0.03, which is below 0.05. In Comparative Example 6, the glass composition underwent phase separation, and a homogeneous glass material was unable to be obtained.

The $B_2O_3$ content in the glass composition of Comparative Example 7 is 11.9 mass%, which exceeds 10 mass%. In Comparative Example 7, a crystalline phase was formed in the glass composition, and a homogeneous glass material was unable to be obtained.

$SiO_2+Al_2O_3$ in the glass composition of Comparative Example 8 is 66.3 mass%, which exceeds 66 mass%. Furthermore, the glass composition of Comparative Example 8 is free of MgO, and MgO/(MgO+CaO) is 0. The glass composition of Comparative Example 8 has a Young's modulus of 88 GPa, i.e., a lower elasticity than those of the glass compositions of Examples 1 to 31. Furthermore, the glass composition of Comparative Example 8 has a working temperature of 1203°C, which is higher than those of the glass compositions of Examples 1 to 31.

Although having a mass reduction rate $\Delta W_1$ of 0.10 mass% under the acidic solution condition, the glass composition of Comparative Example 9 having a composition of a conventional C-glass has a Young's modulus of 78 GPa, i.e., a lower elasticity than those of the glass compositions of Examples 1 to 31.

The glass composition of Comparative Example 10 having a composition of a conventional E-glass has a Young's modulus of 83 GPa, i.e., a lower elasticity than those of the glass compositions of Examples 1 to 31. Furthermore, the glass composition of Comparative Example 10, whose mass reduction rate $\Delta W_2$ under the alkaline solution condition is 0.27 mass%, is inferior in alkali resistance to those of the glass compositions of Examples 1 to 31.

The glass composition of Comparative Example 11 having a composition of a conventional alkali-resistant glass (AR-glass) has a Young's modulus of 84 GPa, i.e., a lower elasticity than those of the glass compositions of Examples 1 to 31.

INDUSTRIAL APPLICABILITY

Since the glass composition of the present invention has high elastic modulus and improved acid resistance and alkali resistance, the glass composition of the present invention is useful not only for forming a structure member but also for forming a filler such as a scaly glass particle, a chopped strand, a milled fiber, a glass powder, or a glass bead. Since the glass composition of the present invention has alkali resistance and high elasticity, the glass composition of the present invention is also useful in particular for forming a filler for cement.

**Claims**

1. A glass composition wherein

   contents of $SiO_2$, $Al_2O_3$, $B_2O_3$, CaO, and $T\text{-}Fe_2O_3$ are
   50 mass% $\leq SiO_2+Al_2O_3 \leq$ 66 mass%,
   0 mass% $\leq B_2O_3 \leq$ 10 mass%,
   5 mass% $\leq$ CaO $\leq$ 30 mass%, and
   10 mass% $< T\text{-}Fe_2O_3 \leq$ 25 mass%,
   a mass ratio calculated by $Al_2O_3/(SiO_2+Al_2O_3)$ is 0.05 or more and less than 0.15, and
   a mass ratio calculated by MgO/(MgO+CaO) is 0.001 or more and 0.20 or less.

2. The glass composition according to claim 1, wherein the $SiO_2$ content is 45 mass% $\leq SiO_2 \leq$ 62 mass%.

3. The glass composition according to claim 1, wherein the $B_2O_3$ content is 0.1 mass% $\leq B_2O_3 \leq$ 10 mass%.

4. The glass composition according to claim 1, wherein a MgO content is 0.1 mass% $\leq$ MgO $\leq$ 10 mass%.

5. The glass composition according to claim 1, wherein a SrO content is 0.1 mass% $\leq$ SrO $\leq$ 15 mass%.

6. The glass composition according to claim 1, wherein a $TiO_2$ content is 0.1 mass% $\leq TiO_2 \leq$ 10 mass%.

7. The glass composition according to claim 1, wherein a $ZrO_2$ content is 0.1 mass% $\leq ZrO_2 \leq$ 10 mass%.

8. The glass composition according to claim 1, wherein a total content of $Li_2O$, $Na_2O$, and $K_2O$ is 0.1 mass% $\leq Li_2O+Na_2O+K_2O \leq$ 5 mass%.

9. The glass composition according to claim 1, wherein a total content of $SiO_2$ and $B_2O_3$ is 50 mass% $\leq SiO_2+B_2O_3 \leq$ 66 mass%.

10. The glass composition according to claim 1, wherein the $T\text{-}Fe_2O_3$ content is 11 mass% $\leq T\text{-}Fe_2O_3 \leq$ 25 mass%.

**11.** The glass composition according to claim 1, comprising coal ash as a raw material.

**12.** A glass fiber formed from the glass composition according to any one of claims 1 to 11.

**13.** The glass fiber according to claim 12 configured to be used for reinforcement of a concrete product, a rubber product, or a plastic product.

**14.** A glass filler formed from the glass composition according to any one of claims 1 to 11.

**15.** The glass filler according to claim 14 configured to be used for reinforcement of a concrete product, a rubber product, or a plastic product.

**16.** The glass filler according to claim 14 being at least one selected from the group consisting of a scaly glass particle, a chopped strand, a milled fiber, a glass powder, and a glass bead.

**17.** The glass filler according to claim 16 being a scaly glass particle.

**18.** The glass filler according to claim 16 being a chopped strand.

**19.** The glass filler according to claim 16 being a milled fiber.

**20.** A glass fiber manufacturing method comprising:

melting the glass composition according to any one of claims 1 to 11; and
spinning the molten glass composition into a glass fiber.

**21.** A glass filler manufacturing method comprising:

melting the glass composition according to any one of claims 1 to 11; and
shaping the molten glass composition into a glass filler.

FIG.1A

FIG.1B

Gas

11

15

12

16

17

1

FIG.2

Glass

24          22          21      11      24      23
                                                23

1                                                    1

FIG.3

FIG.4

FIG.5

FIG.6A

FIG.6B

FIG.7

94 91

92

93

95

FIG.8

EP 4 570 767 A1

## INTERNATIONAL SEARCH REPORT

| International application No. |
|---|
| **PCT/JP2023/028653** |

| A. | CLASSIFICATION OF SUBJECT MATTER |
|---|---|

*C03C 3/087*(2006.01)i; *C03C 3/091*(2006.01)i; *C03C 3/093*(2006.01)i; *C03C 13/00*(2006.01)i
FI: C03C3/087; C03C3/091; C03C3/093; C03C13/00

According to International Patent Classification (IPC) or to both national classification and IPC

| B. | FIELDS SEARCHED |
|---|---|

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2004/076372 A1 (NIPPON SHEET GLASS COMPANY, LIMITED) 10 September 2004 (2004-09-10) | 1-5, 8, 10, 14-17, 21 |
| | claims, specification, p. 8, line 1 to p. 9, line 18, specification, p. 12, lines 14-16, example 6 | |
| Y | | 11 |
| X | JP 2001-524063 A (OWENS CORNING) 27 November 2001 (2001-11-27) | 1, 2, 4, 6-9, 12-15, 20-21 |
| | example 2, p. 18, lines 3-15 | |
| Y | | 11 |
| X | WO 2022/131222 A1 (NIPPON SHEET GLASS COMPANY, LIMITED) 23 June 2022 (2022-06-23) | 1, 2, 9-16, 18-21 |
| | claims, paragraphs [0025], [0032]-[0040], example 4 | |
| Y | | 11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

39

## INTERNATIONAL SEARCH REPORT
### Information on patent family members

International application No.

**PCT/JP2023/028653**

| Patent document cited in search report | | | Publication date (day/month/year) | Patent family member(s) | | | Publication date (day/month/year) |
|---|---|---|---|---|---|---|---|
| WO | 2004/076372 | A1 | 10 September 2004 | EP | 1602632 | A1 | |
| | | | | claims, paragraphs [0038]-[0046], [0062], example 6 | | | |
| | | | | US | 2006/0048679 | A1 | |
| | | | | CN | 1720203 | A | |
| JP | 2001-524063 | A | 27 November 2001 | WO | 1998/018618 | A1 | |
| | | | | example 2, specification, p. 12, lines 4-18 | | | |
| | | | | US | 5932347 | A | |
| | | | | KR | 10-2000-0052666 | A | |
| WO | 2022/131222 | A1 | 23 June 2022 | (Family: none) | | | |

Form PCT/ISA/210 (patent family annex) (January 2015)

**EP 4 570 767 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020529378 A

- JP 2006002543 A

**Non-patent literature cited in the description**

- Glass Engineering Handbook (popular edition). Asakura Publishing Co., Ltd., 1999, 514